(19) Europäisches Patentamt
European Patent Office
Office européen des brevets

(11) **EP 4 773 107 A1**

(12) **EUROPEAN PATENT APPLICATION**
published in accordance with Art. 153(4) EPC

(43) Date of publication:
**08.07.2026 Bulletin 2026/28**

(21) Application number: **24876392.2**

(22) Date of filing: **25.09.2024**

(51) International Patent Classification (IPC):
*G06V 40/12 (2022.01)*    *G06V 10/82 (2022.01)*

(52) Cooperative Patent Classification (CPC):
**G06V 10/82; G06V 40/1359; G06V 40/1365**

(86) International application number:
**PCT/CN2024/121027**

(87) International publication number:
**WO 2025/077574 (17.04.2025 Gazette 2025/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.10.2023 CN 202311314425**

(71) Applicant: **TENCENT TECHNOLOGY (SHENZHEN)
COMPANY LIMITED
Shenzhen, Guangdong 518057 (CN)**

(72) Inventor: **SHEN, Lei
Shenzhen, Guangdong 518057 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **PALMPRINT RECOGNITION METHOD AND APPARATUS, AND STORAGE MEDIUM**

(57)    A palmprint recognition method and apparatus, and a storage medium. The method comprises: acquiring a palm image, and segmenting the palm image into a plurality of palmprint region images which do not overlap (310); extracting respective palmprint line features of the plurality of palmprint region images (320); for each palmprint line feature, acquiring first position relationship information between the palmprint region image corresponding to the palmprint line feature and the palmprint region image corresponding to an adjacent palmprint line feature of the palmprint line feature, and on the basis of the palmprint line feature and the first position relationship information, calculating a first importance score corresponding to the palmprint line feature (S330); determining a plurality of first significant palmprint line features among all the palmprint line features on the basis of the first importance scores (S340); and performing palmprint recognition on the basis of the plurality of first significant palmprint line features to obtain a palmprint recognition result (S350).

FIG. 3

**Description**

RELATED APPLICATION

This application claims priority to Chinese Patent Application No. 202311314425.5, filed with the China National Intellectual Property Administration on October 11, 2023 and entitled "PALMPRINT RECOGNITION METHOD AND APPARATUS, AND STORAGE MEDIUM".

FIELD OF THE TECHNOLOGY

This application relate to the technical field of image processing, and in particular, to a palmprint recognition method and apparatus, and a storage medium.

BACKGROUND OF THE DISCLOSURE

With rapid development of information technologies and network technologies, information security has become unprecedentedly important. Biometric recognition technologies are increasingly widely used due to their inherent stability, uniqueness, and convenience.

Palmprint recognition technology is a new generation of biometric feature recognition technology following fingerprint recognition and face recognition technologies, and has features such as simple sampling, rich image information, high user acceptance, resistance to forgery, and low susceptibility to noise interference. Compared with the fingerprint recognition and face recognition technologies, the palmprint recognition technology is more conducive to protecting user privacy and is not affected by factors such as a mask, makeup, and sunglasses.

SUMMARY

The following is a summary of subject matters described in detail in this specification, which is not intended to limit the protection scope of the claims.

Embodiments of this application provide a palmprint recognition method and apparatus, and a storage medium, which can improve a palmprint feature extraction effect, thereby improving accuracy of palmprint recognition.

The embodiments of this application provide a palmprint recognition method, including:

obtaining a palm image;

segmenting the palm image into a plurality of non-overlapping palmprint area images;

extracting, for each palmprint area image, a palmprint line feature;

determining, for each palmprint line feature, a first relevance level based on first position relationship information between a first palmprint area image corresponding to respective palmprint line feature and a second palmprint area image corresponding to an adjacent palmprint line feature;

determining a plurality of first significant palmprint line features among all the palmprint line features according to the first relevance level; and

performing palmprint recognition according to the plurality of first significant palmprint line features.

The embodiments of this application further provide a palmprint recognition apparatus, including:

an image segmentation unit, configured to obtain a palm image, and segment the palm image into a plurality of non-overlapping palmprint area images;

a feature extraction unit, configured to extract, for each palmprint area image, a palmprint line feature;

a level determining unit, configured to determine, for each palmprint line feature, a first relevance level based on first position relationship information between a first palmprint area image corresponding to respective palmprint line feature and a second palmprint area image corresponding to an adjacent palmprint line feature;

a feature determining unit, configured to determine a plurality of first significant palmprint line features among all the palmprint line features according to the first relevance level; and

a palmprint recognition unit, configured to perform palmprint recognition according to the plurality of first significant palmprint line features.

The embodiments of this application further provide a palmprint recognition apparatus, including:

at least one processor; and

at least one memory, configured to store at least one program;

the at least one program, when executed by the at least one processor, implementing the palmprint recognition method described above.

The embodiments of this application further provide a computer-readable storage medium, storing a processor-executable computer program, the processor-executable computer program, when executed by a processor, implementing the palmprint recognition method described above.

The embodiments of this application further provide a computer program product, including a computer program or computer instructions, the computer program or the computer instructions being stored in a computer-readable storage medium, a processor of a palmprint recognition apparatus reading the computer program or the computer instructions from the computer-readable storage medium, and the processor executing the computer program or the computer instructions to cause the palmprint recognition apparatus to perform the palmprint recognition method described above.

Other features of this application are described in the following specification, and partially become apparent from the specification or may be learned from implementation of this application. Objectives of this application may be implemented and obtained through structures particularly pointed out in the specification and accompanying drawings.

BRIEF DESCRIPTION OF THE DRAWINGS

FIG. 1 is a schematic diagram of an implementation environment according to an embodiment of this application.

FIG. 2 is a schematic diagram of another implementation environment according to an embodiment of this application.

FIG. 3 is a flowchart of a palmprint recognition method according to an embodiment of this application.

FIG. 4 is a schematic diagram of palm area extraction from a hand image according to an embodiment of this application.

FIG. 5 is a schematic diagram of segmenting a palm image to obtain a plurality of palmprint area images according to an exemplary embodiment of this application.

FIG. 6 is a schematic diagram of a process for calculating a positional encoding vector corresponding to a palmprint line feature according to an embodiment of this application.

FIG. 7 is a schematic diagram of a process for determining a first significant palmprint line feature according to a first importance score according to an embodiment of this application.

FIG. 8 is a schematic diagram of a process for obtaining a local attention feature by weighted calculation according to an embodiment of this application.

FIG. 9 is a schematic diagram of a process for obtaining a local attention feature by summation calculation according to an embodiment of this application.

FIG. 10 is a schematic diagram of an overall procedure of identity recognition according to an embodiment of this application.

FIG. 11 is a schematic diagram of a process for calling a recognition model to obtain a palmprint feature vector according to an embodiment of this application.

FIG. 12 is a specific flowchart of a palmprint recognition method according to a specific example of this application.

FIG. 13 is a schematic diagram of a palmprint recognition apparatus according to an embodiment of this application.

FIG. 14 is a schematic diagram of another palmprint recognition apparatus according to an embodiment of this application.

DESCRIPTION OF EMBODIMENTS

This application is further described below with reference to the accompanying drawings of this specification and specific embodiments. The described embodiments are not to be considered as limitations on this specification, and all other embodiments obtained by a person of ordinary skill in the art without creative efforts fall within the protection scope of this application.

"Some embodiments" involved in the following description describes a subset of all possible embodiments. However, "some embodiments" may be a same subset or different subsets of all the possible embodiments, and may be combined with each other when there is no conflict.

Unless otherwise defined, all technical and scientific terms used herein have the same meaning as commonly understood by a technical person in the technical field of this application. The terms used in this specification are merely intended to describe the embodiments of this application, but are not intended to limit this application.

In some implementations, a palmprint recognition method may generally include a geometric feature-based palmprint recognition method, a deep learning-based palmprint recognition method, and the like. In the geometric feature-based palmprint recognition method, palmprint recognition is mainly performed by recognizing a geometric shape on a palm. The method mainly includes operations such as image preprocessing, geometric feature extraction, and pattern matching. The image preprocessing includes performing operations such as denoising, enhancement, and binarization on an input palmprint image. The geometric feature extraction includes calculating a geometric feature of the palm, such as a finger spacing, a finger width, and a palm length. The pattern matching includes performing pattern matching with a template in a database by using the extracted geometric feature, to implement palmprint recognition. The method has relatively good robustness for a relatively low-resolution image and environmental interference, but has limited recognition accuracy. In addition, the deep learning-based palmprint recognition method is mainly performing end-to-end feature learning and recognition on a palm image by using a deep learning technology such as a convolutional neural network (CNN). The method mainly includes operations such as image preprocessing, deep learning model training, and palmprint recognition. The image preprocessing includes performing operations such as denoising, enhancement, and normalization on an input palmprint image. The deep learning model training includes training a deep CNN by using an annotated palmprint image, to enable the trained deep CNN to learn a hierarchical feature of the palmprint image. The palmprint recognition includes inputting, after preprocessing, the input image to a trained deep CNN model for palmprint recognition. The method can automatically learn a hierarchical feature expression of a palm image, thereby improving accuracy and robustness of palmprint recognition. Although the geometric feature-based palmprint recognition method, the deep learning-based palmprint recognition method, and the like can implement palmprint recognition on a palm, the methods are square convolution kernel-based image feature extraction methods, and palmprint information of the palm is mainly concentrated in palmprint lines. Therefore, the square convolution kernel-based image feature extraction methods are not highly compatible with palmprint features of the palm. Consequently, a feature extraction effect is poor, and accuracy of palmprint recognition is affected.

To improve an extraction effect of a palmprint feature and improve accuracy of palmprint recognition, the embodiments of this application provide a palmprint recognition method, a palmprint recognition apparatus, a computer-readable storage medium, and a computer program product. After a palm image is obtained, the palm image is first segmented into a plurality of palmprint area images that do not overlap with each other, and respective palmprint line features of the plurality of palmprint area images are extracted. Through the segmentation of the palm image into the plurality of palmprint area images that do not overlap with each other, a large-range texture area of an entire palm may be segmented into a plurality of small-range palmprint line areas, so that extraction efficiency of the palmprint line features of these palmprint area images may be improved during the extraction of the palmprint line features of these palmprint area images. In addition, the palmprint of the palm includes palmprint lines, and image content of the plurality of palmprint area images obtained through segmentation can be mainly palmprint lines. Therefore, during the extraction of the respective palmprint line features of these palmprint area images, extraction accuracy of the palmprint line features of these palmprint area images can also be improved. After the plurality of palmprint line features are obtained, for each of the palmprint line features, first position relationship information between a palmprint area image corresponding to the palmprint line feature and a palmprint area image corresponding to an adjacent palmprint line feature of the palmprint line feature is obtained first, and then, a first relevance level corresponding to the palmprint line feature is calculated according to the palmprint line feature and the first position relationship information. Because the first position relationship information is information about a position relationship between the palmprint area image corresponding to the palmprint line feature and the palmprint area image corresponding to the adjacent palmprint line feature, the first position relationship information can represent context information between the palmprint line feature and the adjacent palmprint line feature. Therefore, during the calculation of the first relevance level corresponding to the palmprint line feature according to the palmprint line feature and the first position relationship information, the palmprint line feature and the context information corresponding to the palmprint line feature can be combined, so that the calculated first relevance level can more accurately express importance of the palmprint line feature compared with the adjacent palmprint line feature. After the first relevance level corresponding to each palmprint line feature is calculated, a plurality of first significant palmprint line features are first determined among all the palmprint line features according to the first relevance level, and then palmprint recognition is performed according to the plurality of first significant palmprint line features to obtain a palmprint recognition result. Based on the first relevance level, a plurality of first significant palmprint line features that can better express the palm image may be determined among all the palmprint line features, thereby improving a feature extraction effect of the palm image. In this way, during palmprint recognition according to these first significant palmprint line features, accuracy of the palmprint recognition can be improved and a recognition effect of the palmprint recognition can be improved. In embodiments of the present application, the relevance level may also be an importance score.

The solution provided in the embodiments of this application may be applied to various scenarios, including but not limited to, a cloud technology, artificial intelligence (AI), smart transportation, assisted driving, and the like. Corresponding description is specifically provided through the following various embodiments.

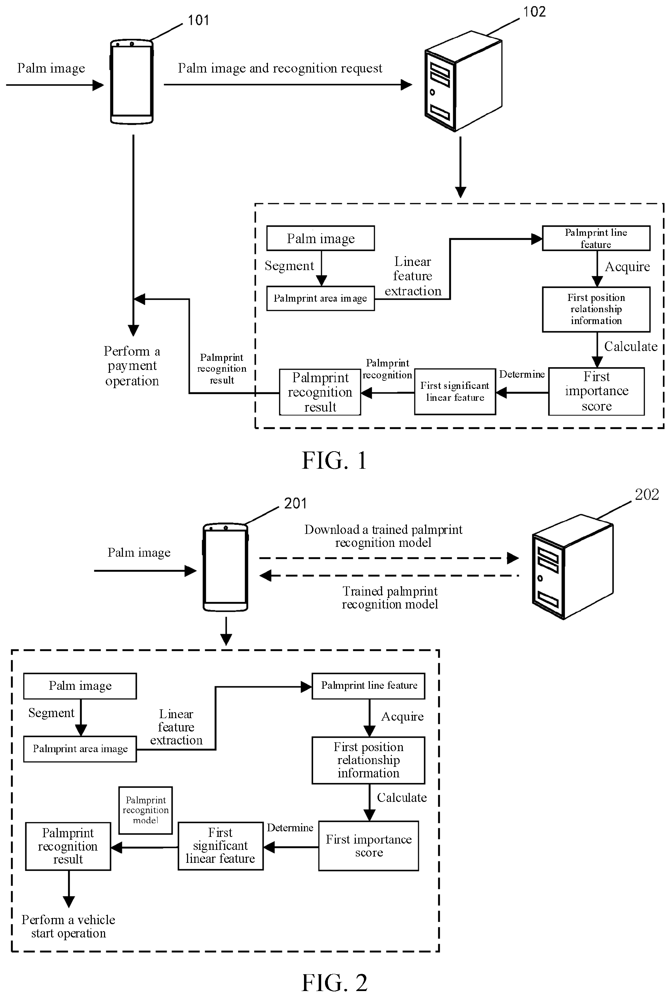

FIG. 1 is a schematic diagram of an implementation environment according to an embodiment of this application. Referring to FIG. 1, the implementation environment includes a first terminal 101 and a first server 102. The first terminal 101 and the first server 102 are connected directly or indirectly in a wired or wireless communication protocol. The first terminal 101 and the first server 102 may be nodes in a blockchain. This is not specifically limited in this embodiment.

The first terminal 101 may include but is not limited to a smartphone, a computer, an intelligent voice interaction device, a smart home appliance, an in-vehicle terminal, an aircraft, or other smart devices with image acquisition functions. In some embodiments, the first terminal 101 may be provided with an image acquisition module, such as a camera or an image sensor, configured to acquire an image. The image acquisition module may photograph a palm image of a user, and then perform recognition processing according to the palm image of the user.

In some embodiments, the first terminal 101 at least has functions such as initiating an image recognition request and obtaining an image recognition result. For example, after photographing the palm image of the user, the first terminal 101 can send the palm image and a recognition request for the palm image to the first server 102, and after receiving a palmprint recognition result fed back by the first server 102 according to the palm image and the recognition request, display the palmprint recognition result or perform control processing on the first terminal 101 according to the palmprint recognition result.

The first server 102 may be an independent physical server, or may be a server cluster or distributed system including a plurality of physical servers, or may be a cloud server providing basic cloud computing services such as a cloud service, a cloud database, cloud computing, a cloud function, cloud storage, a network service, cloud communication, a middleware service, a domain name service, a security service, a content delivery network (CDN), and a big data and AI platform.

In some embodiments, the first server 102 at least has functions such as palm image obtaining, palm image segmentation, palmprint line feature extraction, feature importance score calculation, and palmprint recognition. For example, after obtaining the palm image, the first server 102 can segment the palm image into a plurality of palmprint area images that do not overlap with each other, extract respective palmprint line features of the plurality of palmprint area images, then obtain, for each of the palmprint line features, first position relationship information between a palmprint area image corresponding to the palmprint line feature and a palmprint area image corresponding to an adjacent palmprint line feature, and calculate, according to the palmprint line feature and the first position relationship information, a first importance score corresponding to the palmprint line feature. After calculating the first importance score corresponding to each palmprint line feature, the first server 102 can determine a plurality of first significant palmprint line features among all the palmprint line features according to these first importance scores, and then perform palmprint recognition according to these first significant palmprint line features to obtain a palmprint recognition result. After obtaining the palmprint recognition result, the first server 102 can further send the palmprint recognition result to the first terminal 101, so that the first terminal 101 can display the palmprint recognition result or perform control processing on the first terminal 101 according to the palmprint recognition result.

Referring to FIG. 1, in an application scenario, it is assumed that the first terminal 101 is a payment terminal, and the first terminal 101 is provided with an image acquisition module (such as a camera or an image sensor) configured to acquire an image. When the user scans a palm by using the first terminal 101 to perform a payment behavior, in response to obtaining a palm image of the user, the first terminal 101 sends the palm image and a recognition request for the palm image to the first server 102. In response to receiving the palm image and the recognition request, the first server 102 segments the palm image into a plurality of palmprint area images that do not overlap with each other, extracts respective palmprint line features of the plurality of palmprint area images, then obtains, for each of the palmprint line features, first position relationship information between a palmprint area image corresponding to the palmprint line feature and a palmprint area image corresponding to an adjacent palmprint line feature of the palmprint line feature, and calculates, according to the palmprint line feature and the first position relationship information, a first importance score corresponding to the palmprint line feature. After calculating the first importance score corresponding to each palmprint line feature, the first server 102 determines a plurality of first significant palmprint line features among all the palmprint line features according to these first importance scores. Next, the first server 102 performs palmprint recognition according to these first significant palmprint line features to obtain a palmprint recognition result. After obtaining the palmprint recognition result, the first server 102 sends the palmprint recognition result to the first terminal 101. In response to receiving the palmprint recognition result, the first terminal 101 performs a payment operation according to the palmprint recognition result.

FIG. 2 is a schematic diagram of another implementation environment according to an embodiment of this application. Referring to FIG. 2, the implementation environment includes a second terminal 201 and a second server 202. The second terminal 201 and the second server 202 may be connected directly or indirectly in a wired or wireless communication protocol. The second terminal 201 and the second server 202 may be nodes in a blockchain. This is not specifically limited in this embodiment.

The second terminal 201 may include but is not limited to a smartphone, a computer, an intelligent voice interaction device, a smart home appliance, an in-vehicle terminal, an aircraft, or other smart devices with image acquisition functions. In some embodiments, the second terminal 201 may be provided with an image acquisition module, such as a camera or an image sensor, configured to acquire an image. The image acquisition module may photograph a palm image of a user, and then perform recognition processing according to the palm image of the user.

In some embodiments, the second terminal 201 at least has functions such as obtaining a palmprint recognition model, obtaining a palm image, segmenting a palm image, extracting a palmprint line feature, calculating a feature importance score, and recognizing a palmprint. For example, the second terminal 201 can download a trained palmprint recognition model from the second server 202 in advance. After the second terminal 201 photographs a palm image of a user, the second terminal 201 can segment the palm image into a plurality of palmprint area images that do not overlap with each other; extract respective palmprint line features of the plurality of palmprint area images; then obtain, for each of the palmprint line features, first position relationship information between a palmprint area image corresponding to the palmprint line feature and a palmprint area image corresponding to an adjacent palmprint line feature; calculate, according to the palmprint line feature and the first position relationship information, a first importance score corresponding to the palmprint line feature; after calculating the first importance score corresponding to each palmprint line feature, determine a plurality of first significant palmprint line features among all the palmprint line features according to these first importance scores; and next, call the palmprint recognition model to perform palmprint recognition on these first significant palmprint line features to obtain a palmprint recognition result. After the palmprint recognition result is obtained, the second terminal 201 displays the palmprint recognition result or performs control processing on the second terminal 201 according to the palmprint recognition result.

The second server 202 may be an independent physical server, or may be a server cluster or distributed system including a plurality of physical servers, or may be a cloud server providing basic cloud computing services such as a cloud service, a cloud database, cloud computing, a cloud function, cloud storage, a network service, cloud communication, a middleware service, a domain name service, a security service, a CDN, and a big data and AI platform.

In some embodiments, the second server 202 at least has functions such as training a palmprint recognition model by using training samples and delivering the trained palmprint recognition model. For example, the second server 202 can randomly generate palmprint training samples, or obtain public palmprint images through the Internet, use the public palmprint images as palmprint training samples, and then train the palmprint recognition model by using these palmprint training samples. After completing the training of the palmprint recognition model, when receiving a model download request sent by the second terminal 201, the second server 202 can send the trained palmprint recognition model to the second terminal 201, so that the second terminal 201 can directly perform palmprint recognition on the palm image of the user by locally using the trained palmprint recognition model.

Referring to FIG. 2, in another application scenario, it is assumed that the second terminal 201 is an in-vehicle terminal, and the second terminal 201 is provided with an image acquisition module (such as a camera or an image sensor) configured to capture an image. In addition, the second terminal 201 further downloads a trained palmprint recognition model from the second server 202 in advance. When the user scans a palm by using the second terminal 201 to start a vehicle, in response to obtaining a palm image of the user, the second terminal 201 first segments the palm image into a plurality of palmprint area images that do not overlap with each other; extracts respective palmprint line features of the plurality of palmprint area images; then obtains, for each of the palmprint line features, first position relationship information between a palmprint area image corresponding to the palmprint line feature and a palmprint area image corresponding to an adjacent palmprint line feature of the palmprint line feature; and calculates, according to the palmprint line feature and the first position relationship information, a first importance score corresponding to the palmprint line feature. After calculating the first importance score corresponding to each palmprint line feature, the second terminal 201 determines a plurality of first significant palmprint line features among all the palmprint line features according to these first importance scores, and then calls the palmprint recognition model to perform palmprint recognition on these first significant palmprint line features to obtain a palmprint recognition result. After obtaining the palmprint recognition result, the second terminal 201 performs a vehicle startup operation according to the palmprint recognition result.

In various specific implementations of this application, when relevant processing needs to be performed based on data related to characteristics of a target object (for example, a user), such as attribute information or an attribute information set of the target object, permission or consent of the target object is first obtained, and collection, use, and processing of such data all comply with relevant laws, regulations, and standards. In addition, in the embodiments of this application, when the attribute information of the target object needs to be obtained, individual permission or individual consent of the target object is obtained by popping up a window, jumping to a confirmation page, or the like. After the individual permission or individual consent of the target object is explicitly obtained, relevant data of the target object that is necessary for enabling normal operation of the embodiments of this application is obtained.

The embodiments of this application may be applied to various scenarios in which a palmprint image needs to be recognized, including but not limited to a palmprint recognition scenario in fields such as payment, access control, and vehicle control.

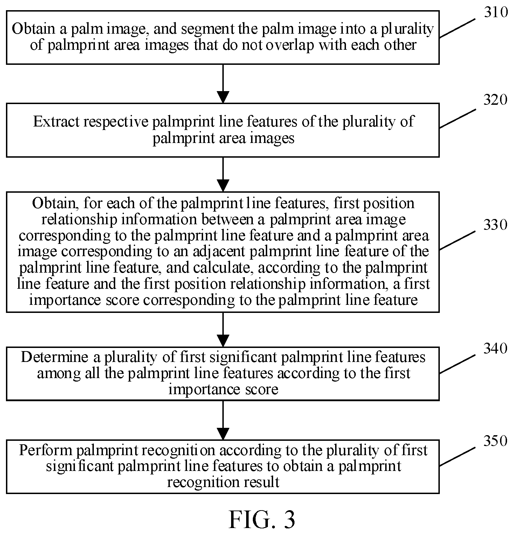

FIG. 3 is a flowchart of a palmprint recognition method according to an embodiment of this application. The palmprint recognition method may be performed by a terminal or a server, or may be jointly performed by a terminal and a server. In this embodiment of this application, description is provided by using an example in which the method is performed by a server. Referring to FIG. 3, the palmprint recognition method includes but is not limited to operation 310 to operation 350.

Operation 310: Obtain a palm image, and segment the palm image into a plurality of palmprint area images that do not overlap with each other.

In some embodiments, when an image acquisition device of the terminal acquires a palm image of a user that does not include a part such as a finger, the server may directly obtain the palm image uploaded by the terminal, and then segment the palm image into a plurality of palmprint area images that do not overlap with each other. When the image acquisition device of the terminal acquires a hand image including a part such as a finger of the user, after receiving the hand image uploaded by the terminal, the server may first extract a palm image from the hand image, and then segment the extracted palm image into a plurality of palmprint area images that do not overlap with each other. Through the segmentation of the palm image into the plurality of palmprint area images that do not overlap with each other, a large-range texture area of an entire palm may be segmented into a plurality of small-range palmprint line areas, so that image content of the palmprint area images obtained through segmentation can be mainly palmprint lines. In this way, during extraction of palmprint line features of these palmprint area images, the impact of other image content on the extraction of the palmprint line features can be reduced. Therefore, not only extraction efficiency of the palmprint line features of these palmprint area images can be improved, but also extraction accuracy of the palmprint line features of these palmprint area images can be improved.

In some embodiments, the plurality of palmprint area images that do not overlap with each other and that are obtained through segmentation may be represented in a form of an image matrix. Therefore, after the palm image is segmented, a palmprint area image matrix including the plurality of palmprint area images that do not overlap with each other may be obtained, so that these palmprint area images can be corresponding to a palmprint line feature matrix obtained in a subsequent operation, thereby facilitating subsequent feature processing.

In some embodiments, during palm area extraction performed on the hand image uploaded by the terminal to obtain the palm image, the palm area extraction may be performed on the hand image in a manner based on a neural network model, or the palm area extraction may be performed on the hand image in a manner based on a non-neural network model. This is not specifically limited herein. When the palm area extraction is performed on the hand image in the manner based on the neural network model, the hand image may be input to a trained palm area extraction model to for palm area extraction, to obtain a palm image including only a palm area (that is, the palm image does not include content such as a finger part). During training of the palm area extraction model, training samples obtained in different manners may be used to train the palm area extraction model. For example, public palm images on the Internet may be used as training samples, or different photographing terminals may be used to photograph different palms, and photographed palm images are used as training samples. A manner of obtaining a training sample may be appropriately selected according to an actual application situation, and is not specifically limited herein. In addition, when the palm area extraction is performed on the hand image by using a non-neural network model, a first finger gap position, a second finger gap position, and a third finger gap position in the hand image may be first detected by using a YOLOv2-based finger gap point target detector, the second finger gap position being located between the first finger gap position and the third finger gap position. Then, a first coordinate axis is determined according to the first finger gap position and the third finger gap position. Next, a second coordinate axis is determined according to the second finger gap position and the first coordinate axis, the second coordinate axis being perpendicular to the first coordinate axis. After the second coordinate axis is determined, a palmprint center point is determined in the second coordinate axis according to a distance between the first finger gap position and the third finger gap position, and then the palm image is determined according to the first finger gap position, the third finger gap position, and the palmprint center point.

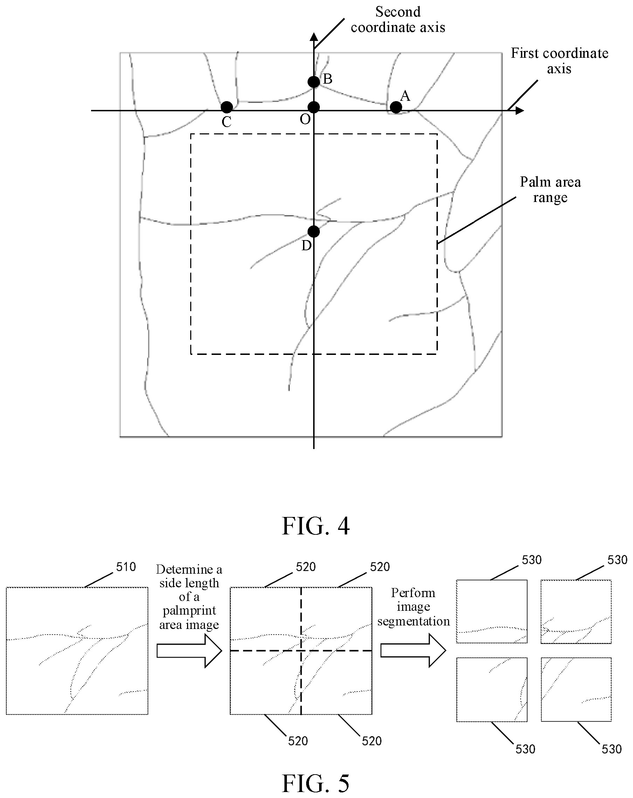

In some embodiments, as shown in FIG. 4, the first finger gap position may be a finger gap position between an index finger and a middle finger, the second finger gap position may be a finger gap position between the middle finger and a ring finger, and the third finger gap position may be a finger gap position between the ring finger and a little finger. To be specific, the first finger gap position may be a position of point A in FIG. 4, the second finger gap position may be a position of point B in FIG. 4, and the third finger gap position may be a position of point C in FIG. 4. After the first finger gap position, the second finger gap position, and the third finger gap position in the hand image are determined, a straight line on which the first finger gap position and the third finger gap position are located may be used as the first coordinate axis. For example, in FIG. 4, a straight line on which point A and point C are located is used as the first coordinate axis. Then, a straight line on which the second finger gap position is located and that is perpendicular to the first coordinate axis is used as the second coordinate axis. For example, in FIG. 4, a straight line on which the point B is located and that is perpendicular to the first coordinate axis is used as the second coordinate axis. In this case, an intersection point of the first coordinate axis and the second coordinate axis is a coordinate origin, for example, point O in FIG. 4. Next, the palmprint center point is determined in the second coordinate axis along a direction pointing from the second finger gap position to the coordinate origin, for example, point D in FIG. 4, so that a distance between the palmprint center point and the coordinate origin is equal to or approximately equal to the distance between the first finger gap position and the third finger gap position. That the distance between the palmprint center point and the coordinate origin is approximately equal to the distance between the first finger gap position and the third finger gap position means that an absolute value of a difference between the distance between the palmprint center point and the coordinate origin and the distance between the first finger gap position and the third finger gap position is less than a preset threshold. The preset threshold may be appropriately selected according to an actual application situation, and is not specifically limited herein. After the palmprint center point is determined in the second coordinate axis, a palm area range, for example, a range of a rectangular box in FIG. 4, may be determined by using the palmprint center point as a center, and using a product of a preset coefficient and the distance between the first finger gap position and the third finger gap position as a side length of the palm area. Then, an image corresponding to the palm area range is determined as the palm image. The preset coefficient may be a value greater than 1 or less than 1. For example, the preset coefficient may be 1.5, 0.8, or the like. The preset coefficient may be appropriately selected according to an actual application situation, and is not specifically limited herein.

In some embodiments, during segmentation of the palm image into a plurality of palmprint area images that do not overlap with each other, a quantity of the segmented palmprint area images may be first determined, then a side length of the palmprint area image is determined according to the quantity of the palmprint area images and a side length of the palm image, and then the palm image is segmented according to the side length of the palmprint area image, to obtain the plurality of palmprint area images that do not overlap with each other. For example, as shown in FIG. 5, assuming that there are four palmprint area images 530 obtained through segmentation, during determining of a side length of the palmprint area image 530 according to the quantity of the palmprint area images 530 and a side length of a palm image 510, it may be determined that the side length of the palmprint area image 530 is a half of the side length of the palm image 510. Therefore, four segmentation areas 520 may be determined in the palm image 510, and then the four segmentation areas 520 are segmented in the palm image 510, to obtain the four palmprint area images 530 that do not overlap with each other.

Operation 320: Extract respective palmprint line features of the plurality of palmprint area images.

In some embodiments, after the plurality of palmprint area images that do not overlap with each other are obtained through segmentation, respective palmprint line features of the plurality of palmprint area images may be extracted. That is, a palmprint line feature of each of the palmprint area images may be extracted. Because a palm palmprint includes palmprint lines, and image content of the plurality of palmprint area images obtained through segmentation can be mainly palmprint lines, during the extraction of the palmprint line features of these palmprint area images, the impact of other image content in the palm image on the extraction of the palmprint line features may be reduced, thereby improving extraction accuracy of the palmprint line features of these palmprint area images.

In some embodiments, a plurality of palmprint line features obtained by extracting palmprint line features of the plurality of palmprint area images may be represented in a form of a feature matrix. Therefore, after the respective palmprint line features of the plurality of palmprint area images are extracted, a palmprint line feature matrix including a plurality of palmprint line features may be obtained, so that these palmprint line features can be corresponding to the palmprint area image matrix obtained in the previous operation, thereby facilitating a subsequent operation of processing the palmprint line features by using the feature matrix.

Operation 330: Obtain, for each of the palmprint line features, first position relationship information between a palmprint area image corresponding to the palmprint line feature and a palmprint area image corresponding to an adjacent palmprint line feature of the palmprint line feature, and calculate, according to the palmprint line feature and the first position relationship information, a first importance score corresponding to the palmprint line feature.

In some embodiments, after the palmprint line feature of each palmprint area image is extracted, for each of the palmprint line features, first position relationship information between a palmprint area image corresponding to the palmprint line feature and a palmprint area image corresponding to an adjacent palmprint line feature of the palmprint line feature may be obtained. Because the first position relationship information is information about a position relationship between the palmprint area image corresponding to the palmprint line feature and the palmprint area image corresponding to the adjacent palmprint line feature, the first position relationship information can represent context information between the palmprint line feature and the adjacent palmprint line feature. Therefore, during the calculation of the first importance score corresponding to the palmprint line feature according to the palmprint line feature and the first position relationship information, the palmprint line feature and the context information corresponding to the palmprint line feature can be combined, so that the calculated first importance score can more accurately express importance of the palmprint line feature compared with the adjacent palmprint line feature.

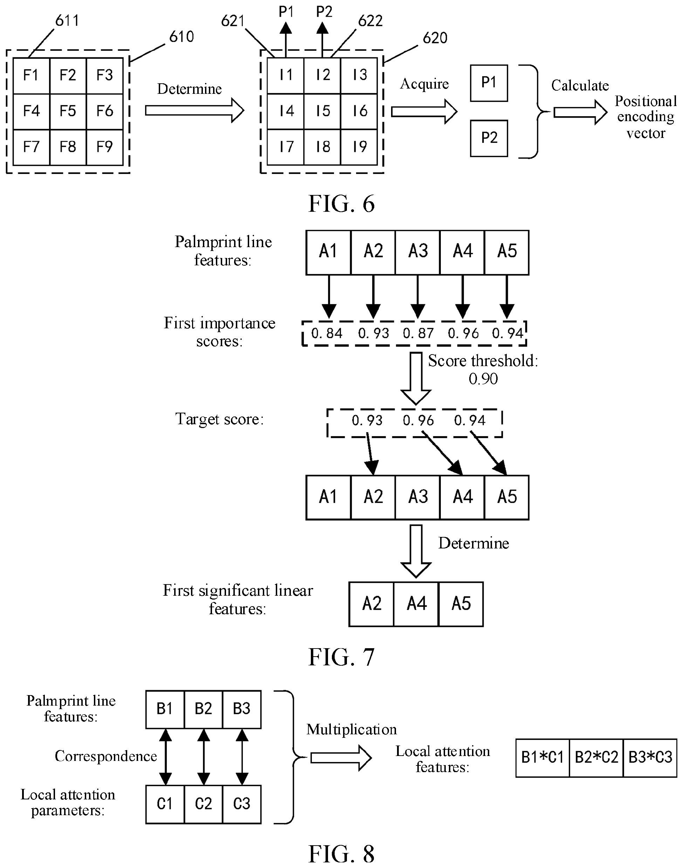

In some embodiments, in a process of obtaining the first position relationship information between the palmprint area image corresponding to the palmprint line feature and the palmprint area image corresponding to the adjacent palmprint line feature, a first coordinate of the palmprint area image corresponding to the palmprint line feature in the palm image and a second coordinate of the palmprint area image corresponding to the adjacent palmprint line feature of the palmprint line feature in the palm image may be obtained first, and then a positional encoding vector corresponding to the palmprint line feature is calculated according to the first coordinate and the second coordinate. Next, the positional encoding vector is used as the first position relationship information between the palmprint area image corresponding to the palmprint line feature and the palmprint area image corresponding to the adjacent palmprint line feature of the palmprint line feature. Because the first position relationship information can represent context information between the palmprint line feature and the adjacent palmprint line feature, the positional encoding vector calculated according to the first coordinate and the second coordinate can represent context information between a palmprint area image and an adjacent palmprint area image. Moreover, the palmprint line feature is in a one-to-one correspondence with the palmprint area image. Therefore, the positional encoding vector corresponding to the palmprint line feature can be represented by using a positional encoding vector of the palmprint area image corresponding to the palmprint line feature. Therefore, The positional encoding vector corresponding to the palmprint line feature may be used as the first position relationship information between the palmprint area image corresponding to the palmprint line feature and the palmprint area image corresponding to the adjacent palmprint line feature of the palmprint line feature. In addition, the first coordinate of the palmprint area image corresponding to the palmprint line feature is in the palm image and the second coordinate of the palmprint area image corresponding to the adjacent palmprint line feature in the palm image are first obtained, and then the positional encoding vector to be used as the first position relationship information is calculated according to the first coordinate and the second coordinate. Therefore, calculation processing for a position of the palmprint line feature can be converted into calculation processing for a position of the palmprint area image, thereby effectively reducing the difficulty of calculating the positional encoding vector corresponding to the palmprint line feature, so that the calculation for the positional encoding vector corresponding to the palmprint line feature can be more conveniently performed. As shown in FIG. 6, FIG. 6 exemplarily provides a process of calculating a positional encoding vector corresponding to a palmprint line feature. In FIG. 6, it is assumed that a positional encoding vector corresponding to a palmprint line feature F1 in a palmprint line feature matrix 610 needs to be calculated. In this case, a target palmprint area image 11 corresponding to the palmprint line feature F1 and an adjacent palmprint area image 12 corresponding to an adjacent palmprint line feature F2 of the palmprint line feature F1 may be determined first in a palmprint area image matrix 620 corresponding to the palmprint line feature matrix 610. Then, a first coordinate P1 of the target palmprint area image 11 and a second coordinate P2 of the adjacent palmprint area image 12 are obtained in the palmprint area image matrix 620. Next, the positional encoding vector corresponding to the palmprint line feature F1 is calculated according to the first coordinate P1 and the second coordinate P2.

In some embodiments, in a process of calculating the positional encoding vector corresponding to the palmprint line feature according to the first coordinate and the second coordinate, a coordinate offset between the first coordinate and the second coordinate may be calculated first, and then position encoding projection is performed on the coordinate offset to obtain the positional encoding vector corresponding to the palmprint line feature. During the position encoding projection on the coordinate offset, a projection weight for performing the position encoding projection may be determined first, and then the position encoding projection is performed on the coordinate offset according to the projection weight. In some embodiments, the positional encoding vector corresponding to the palmprint line feature may be calculated by using the following formula (1):

$$P_{i,j} = W * (p_i - p_j) \qquad (1)$$

In formula (1), $p_i$ represents a first coordinate corresponding to an $i^{th}$ palmprint line feature, that is, a coordinate of a palmprint area image corresponding to the $i^{th}$ palmprint line feature; $p_j$ represents a second coordinate corresponding to a $j^{th}$ palmprint line feature, that is, a coordinate of a palmprint area image corresponding to the $j^{th}$ palmprint line feature, the $i^{th}$ palmprint line feature and the $j^{th}$ palmprint line feature being in an adjacent relationship with each other in the palmprint line feature matrix; W represents the projection weight, used for projecting $p_j$ to position code corresponding thereto; and $P_{i,j}$ represents a positional encoding vector corresponding to the $i^{th}$ palmprint line feature. Therefore, when the positional encoding vector corresponding to the palmprint line feature needs to be calculated, the first coordinate corresponding to the palmprint line feature and the second coordinate corresponding to the adjacent palmprint line feature may be obtained first, then the coordinate offset between the first coordinate and the second coordinate is calculated, and next, the coordinate offset is input to a fully-connected layer, so that the fully-connected layer assigns a projection weight to the coordinate offset, and the positional encoding vector corresponding to the palmprint line feature is obtained by using a product of the projection weight and the coordinate offset.

In some embodiments, in a process of calculating, according to the palmprint line feature and the first position relationship information, the first importance score corresponding to the palmprint line feature, a local attention feature corresponding to the palmprint line feature may be first calculated according to the palmprint line feature and the first position relationship information, and then the first importance score corresponding to the palmprint line feature is calculated according to the local attention feature and the first position relationship information. The first position relationship information can represent context information between the palmprint line feature and the adjacent palmprint line feature, and the local attention feature that corresponds to the palmprint line feature and that is calculated according to the palmprint line feature and the first position relationship information can highlight importance of the palmprint line feature compared with the adjacent palmprint line feature. Therefore, the first importance score that corresponds to the palmprint line feature and that is calculated according to the local attention feature and the first position relationship information can better express importance of each palmprint line feature among all palmprint line features. This is conducive to determining, among all the palmprint line features according to the first importance score, a plurality of first significant palmprint line features that are more important and can better express the palmprint features of the palm in subsequent operations, thereby helping improve accuracy of subsequently performed palmprint recognition.

In some embodiments, in a process of calculating, according to the palmprint line feature and the first position relationship information, the local attention feature corresponding to the palmprint line feature, a manner of calculating local attention of the palmprint line feature may be used. First, local attention calculation is performed according to the palmprint line feature and the first position relationship information, to obtain a local attention parameter corresponding to the palmprint line feature, and then, the local attention feature corresponding to the palmprint line feature is calculated according to the palmprint line feature and the local attention parameter. The calculation of the local attention parameter corresponding to the palmprint line feature according to the palmprint line feature and the first position relationship information enables the local attention parameter to express a significance degree of the palmprint line feature, so that the local attention feature calculated according to the palmprint line feature and the local attention parameter can enhance the palmprint line feature, thereby enhancing a recognition effect of the palmprint line feature in a subsequent operation.

In some embodiments, in a process of performing local attention calculation according to the palmprint line feature and the first position relationship information, to obtain the local attention parameter corresponding to the palmprint line feature, a query feature and a key feature that correspond to the palmprint line feature may be first calculated according to the palmprint line feature, and then the local attention parameter corresponding to the palmprint line feature is calculated according to the query feature, the key feature, and the first position relationship information. During the calculation of the query feature and the key feature that correspond to the palmprint line feature according to the palmprint line feature, two different linear transformations may be performed on the palmprint line feature, to obtain the query feature and the key feature that correspond to the palmprint line feature. In an embodiment, the local attention parameter of the palmprint line feature may be calculated by using the following formula (2):

$$Local\_attention = softmax(QK^T + P) \qquad (2)$$

In formula (2), *Local_attention* represents the local attention parameter of the palmprint line feature; *Q* represents the query feature of the palmprint line feature; *K* represents the key feature of the palmprint line feature, and $K^T$ represents a transposed key feature obtained after matrix transposition is performed on the key feature *K*; *P* represents the positional encoding vector (that is, the first position relationship information) corresponding to the palmprint line feature; and *softmax()* represents probability distribution mapping, used for representing the local attention parameter of the palmprint line feature in a form of a probability. Therefore, when the local attention parameter of the palmprint line feature needs to be calculated, a query feature linear transformation of may be first performed on the palmprint line feature to obtain the query feature corresponding to the palmprint line feature, and a key feature linear transformation may be performed on the palmprint line feature to obtain the key feature corresponding to the palmprint line feature. In addition, the positional encoding vector corresponding to the palmprint line feature is calculated by using the foregoing formula (1). Then, matrix transposition is performed on the key feature corresponding to the palmprint line feature to obtain the transposed key feature. Then, matrix addition is performed on the positional encoding vector and a result obtained by performing matrix multiplication on the query feature and the transposed key feature. Next, a result of the matrix addition is input to a *softmax* () function to perform probability distribution mapping, to obtain the local attention parameter of the palmprint line feature.

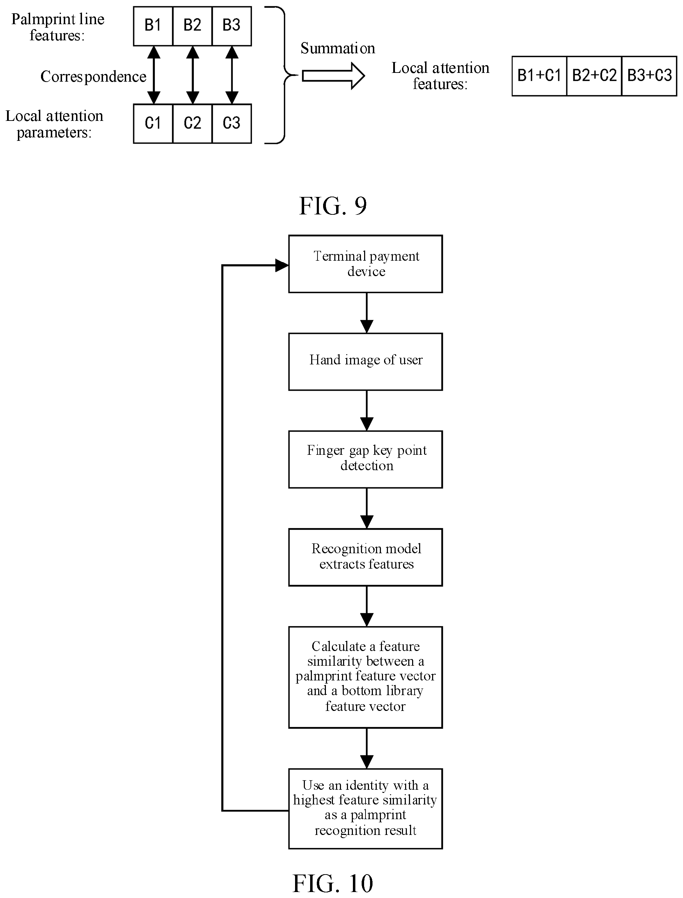

In some embodiments, in a process of calculating, according to the palmprint line feature and the local attention parameter, the local attention feature corresponding to the palmprint line feature, weighted calculation or summation calculation may be performed on the palmprint line feature according to the local attention parameter, to obtain the local attention feature corresponding to the palmprint line feature. As shown in FIG. 8 and FIG. 9, FIG. 8 exemplarily provides a process of obtaining a local attention feature corresponding to a palmprint line feature through weighted calculation, and FIG. 9 exemplarily provides a process of obtaining a local attention feature corresponding to a palmprint line feature through summation calculation. In FIG. 8, it is assumed that there are a palmprint line feature B1, a palmprint line feature B2, and a palmprint line feature B3, a local attention parameter corresponding to the palmprint line feature B1 being C1, a local attention parameter corresponding to the palmprint line feature B2 being C2, and a local attention parameter corresponding to the palmprint line feature B3 being C3. In this case, multiplying the palmprint line feature B1 and the local attention parameter C1 may obtain a local attention feature corresponding to the palmprint line feature B1 being B1 * C1. Multiplying the palmprint line feature B2 and the local attention parameter C2 may obtain a local attention feature corresponding to the palmprint line feature B2 being B2 * C2. Multiplying the palmprint line feature B3 and the local attention parameter C3 may obtain a local attention feature corresponding to the palmprint line feature B3 being B3 * C3. In FIG. 9, it is assumed that there are a palmprint line feature B1, a palmprint line feature B2, and a palmprint line feature B3, a local attention parameter corresponding to the palmprint line feature B1 being C1, a local attention parameter corresponding to the palmprint line feature B2 being C2, and a local attention parameter corresponding to the palmprint line feature B3 being C3. In this case, adding the palmprint line feature B1 and the local attention parameter C1 may obtain a local attention feature corresponding to the palmprint line feature B1 being B1+C1. Adding the palmprint line feature B2 and the local attention parameter C2 may obtain a local attention feature corresponding to the palmprint line feature B2 being B2+C2. Adding the palmprint line feature B3 and the local attention parameter C3 may obtain a local attention feature corresponding to the palmprint line feature B3 being B3+C3.

In some embodiments, in a process of calculating, according to the local attention feature and the first position relationship information, the first importance score corresponding to the palmprint line feature, the local attention feature may be first mapped to an importance score dimension, to obtain an importance score feature corresponding to the palmprint line feature, and then the first importance score corresponding to the palmprint line feature is calculated according to the importance score feature and the first position relationship information. During mapping of the local attention feature to the importance score dimension, the local attention feature may be mapped to the importance score dimension by using a fully-connected layer. In addition, when there is a plurality of adjacent palmprint line features, in a process of calculating, according to the importance score feature and the first position relationship information, the first importance score corresponding to the palmprint line feature, multiplication and accumulation calculation may be performed according to the importance score feature and first position relationship information that corresponds to the plurality of adjacent palmprint line features, to obtain the first importance score corresponding to the palmprint line feature. In an embodiment, the first importance score corresponding to the palmprint line feature may be calculated by using the following formula (3):

$$I_i = \sum_{j=1}^{N} \sigma\big(FC(f_i)\big) * W\big(p_i - p_j\big) \qquad (3)$$

In formula (3), $f_i$ represents a local attention feature corresponding to an $i^{th}$ palmprint line feature; $FC()$ represents mapping in the importance score dimension, used for mapping the local attention feature to the importance score dimension; $I_i$ represents a first importance score corresponding to the local attention feature $f_i$ corresponding to the $i^{th}$ palmprint line feature; $\sigma()$ represents a Sigmoid function, used for implementing normalization processing on a value; $p_i$ represents a first coordinate corresponding to the $i^{th}$ palmprint line feature, that is, a coordinate of a palmprint area image corresponding to the $i^{th}$ palmprint line feature; $p_j$ represents a second coordinate corresponding to a $j^{th}$ palmprint line feature, that is, a coordinate of a palmprint area image corresponding to the $j^{th}$ palmprint line feature, the $i^{th}$ palmprint line feature and the $j^{th}$ palmprint line feature being in an adjacent relationship with each other in the palmprint line feature matrix; and $W$ represents a projection weight, used for projecting $p_i$ to position code corresponding thereto. Therefore, when the first importance score corresponding to the palmprint line feature needs to be calculated, a plurality of positional encoding vectors corresponding to the palmprint line feature may be first determined, that is, $W(p_i - p_j)$ in the formula (2). Then, the local attention feature $f_i$ is mapped to the importance score dimension by using an $FC()$ function, to obtain an importance score feature $FC(f_i)$, and normalization processing is performed on the importance score feature $FC(f_i)$ by

using a $\sigma()$ function. Next, an importance score feature obtained after the normalization processing is multiplied and accumulated by the plurality of positional encoding vectors, to obtain the first importance score corresponding to the palmprint line feature. The following describes, by using a specific example, the process of calculating the first importance score corresponding to the palmprint line feature. It is assumed that a current palmprint line feature has three adjacent palmprint line features, a first coordinate corresponding to the current palmprint line feature is $p_1$, and second coordinates corresponding to the three adjacent palmprint line features are $p_0$, $p_2$, and $p_4$, respectively. In this case, during calculation of a first importance score corresponding to the current palmprint line feature $p_1$, positional encoding vectors of the current palmprint line feature with respect to the three adjacent palmprint line features may be first determined, and the positional encoding vectors of the current palmprint line feature with respect to the three adjacent palmprint line features may be obtained as $W(p_1 - p_0)$, $W(p_1 - p_2)$, and $W(p_1 - p_4)$, respectively. Then, the $FC()$ function is called to map the current palmprint line feature to the importance score dimension, to obtain an importance score feature, being $FC(f_1)$, corresponding to the current palmprint line feature, and the $\sigma()$ function is called to perform normalization processing on the importance score feature corresponding to the current palmprint line feature, to obtain a normalized importance score feature, being $\sigma(FC(f_1))$. In this case, the normalized importance score feature and the positional encoding vectors of the current palmprint line feature with respect to the three adjacent palmprint line features are respectively multiplied and then added, to obtain the first importance score, being $I_1 = \sigma(FC(f_1)) * W(p_1 - p_0) + \sigma\text{-}(FC(f_1)) * W(p_1 - p_2) + \sigma(FC(f_1)) * W(p_1 - p_4)$, corresponding to the current palmprint line feature.

Operation 340: Determine a plurality of first significant palmprint line features among all the palmprint line features according to the first importance score.

In some embodiments, in a process of determining the plurality of first significant palmprint line features among all the palmprint line features according to the first importance score, a plurality of target scores that meet a preset condition may be first determined among all the first importance scores, and then, a plurality of palmprint line features corresponding to the plurality of target scores are determined as the plurality of first significant palmprint line features among all the palmprint line features. Although the first importance score can express importance of the palmprint line feature, a score threshold or a proportion threshold is still needed to classify the first importance score that can express the first significant palmprint line feature. Therefore, a score threshold or a proportion threshold may be preset, and a case in which a value is greater than the score threshold or a case in which a ranking proportion is greater than the proportion threshold is used as a preset condition, to determine, among all the first importance scores, a plurality of target scores that meet the preset condition. In this case, palmprint line features corresponding to these target scores may be determined as first significant palmprint line features among all the palmprint line features. When the preset condition is that the value is greater than the score threshold, each first importance score may be directly compared with the score threshold, to determine the plurality of target scores that meet the preset condition. When the preset condition is that the ranking proportion is greater than the proportion threshold, all first importance scores may be sorted in descending order of values, and then a first importance score whose ranking proportion is greater than the ratio threshold is determined as a target score. For example, assuming that the proportion threshold is 50%, first importance scores ranking top 50% may be determined as target scores. As shown in FIG. 7, FIG. 7 exemplarily provides a process of determining a plurality of first significant palmprint line features among all palmprint line features according to a first importance score. In FIG. 7, it is assumed that all the palmprint line features include a palmprint line feature A1, a palmprint line feature A2, a palmprint line feature A3, a palmprint line feature A4, and a palmprint line feature A5, a first importance score corresponding to the palmprint line feature A1 being 0.84, a first importance score corresponding to the palmprint line feature A2 being 0.93, a first importance score corresponding to the palmprint line feature A3 being 0.87, a first importance score corresponding to the palmprint line feature A4 being 0.96, a first importance score corresponding to the palmprint line feature A5 being 0.94, and a score threshold being 0.90. In this case, it may be determined that 0.93, 0.96, and 0.94 are all target scores that meet the preset condition. Therefore, among all the palmprint line features, the palmprint line feature corresponding to the first importance score 0.93, the palmprint line feature corresponding to the first importance score 0.96, and the palmprint line feature corresponding to the first importance score 0.94 may be determined as first significant palmprint line features. In other words, the palmprint line feature A2, the palmprint line feature A4, and the palmprint line feature A5 may be determined as first significant palmprint line features.

In an example, a proportion threshold of palmprint line features having highest first importance scores may be selected from each row of palmprint line features of the palmprint line feature matrix, as the first significant palmprint line features, or a proportion threshold of palmprint line features having highest first importance scores may be selected from each column of palmprint line features of the palmprint line feature matrix, as the first significant palmprint line features.

Operation 350: Perform palmprint recognition according to the plurality of first significant palmprint line features to obtain a palmprint recognition result.

In some embodiments, after the plurality of first significant palmprint line features are obtained, palmprint recognition may be performed according to the plurality of first significant palmprint line features to obtain a palmprint recognition result. In a process of performing palmprint recognition according to the plurality of first significant palmprint line features to obtain the palmprint recognition result, the plurality of first significant palmprint line features may be first vectorized, to obtain a significant palmprint line feature vector represented in a form of a matrix, and then a palmprint recognition model is called to perform palmprint recognition on the significant palmprint line feature vector to obtain the palmprint recognition result. During vectorization of the plurality of first significant palmprint line features, a multi-layer perceptron (MLP) may be used to vectorize the plurality of first significant palmprint line features. For example, it is assumed that the first significant palmprint line features are embedding, and the significant palmprint line feature vector is embedding_final. In this case, a process of vectorizing the plurality of first significant palmprint line features by using the MLP may be expressed as embedding_final = MLP(embedding).

In some embodiments, before the palmprint recognition model is called to perform palmprint recognition on the significant palmprint line feature vector, the palmprint recognition model may be trained in advance. For example, the method described in the foregoing embodiments may be used to obtain a plurality of first significant palmprint line features in a training sample, and these first significant palmprint line features of the training sample are vectorized, to obtain a significant palmprint line feature vector of the training sample. Then, the significant palmprint line feature vector of the training sample is input to the palmprint recognition model for palmprint recognition, to obtain a recognition result. Next, a recognition loss value is calculated according to the recognition result and a sample label. In addition, gradient back propagation is performed in the palmprint recognition model according to the recognition loss value, and a model parameter of the palmprint recognition model is corrected, to implement training of the palmprint recognition model.

In some embodiments, in a process of performing palmprint recognition according to the plurality of first significant palmprint line features to obtain a palmprint recognition result, a plurality of iterations of significant feature extraction processing may be first performed according to the plurality of first significant palmprint line features, to obtain a plurality of second significant palmprint line features obtained during each time of significant feature extraction processing, then feature fusion is performed on the first significant palmprint line features and all the second significant palmprint line features to obtain a palmprint fusion feature, and then palmprint recognition is performed according to the palmprint fusion feature to obtain the palmprint recognition result. In this embodiment, for a process of performing palmprint recognition according to the palmprint fusion feature, refer to related descriptions of the foregoing operation 350, and details are not described herein again.

In some embodiments, after the plurality of first significant palmprint line features are obtained, these first significant palmprint line features may be used as a basis for performing a plurality of iterations of significant feature extraction processing, and then, a plurality of second significant palmprint line features obtained during each time of significant feature extraction processing are acquired. Using these first significant palmprint line features as a basis for performing a plurality of iterations of significant feature extraction processing means that a first time of significant feature extraction processing is performed on these first significant palmprint line features to obtain a plurality of second significant palmprint line features output by the first time of significant feature extraction processing, then a second time of significant feature extraction processing is performed on these second significant palmprint line features output by the first time of significant feature extraction processing to obtain a plurality of second significant palmprint line features output by the second time of significant feature extraction processing, and then a third time of significant feature extraction processing is performed on these second significant palmprint line features output by the second time of significant feature extraction processing to obtain a plurality of second significant palmprint line features output by the third time of significant feature extraction processing. The process continues to iterate in this way until a quantity of times of significant feature extraction processing performed reaches a preset quantity of times. The preset quantity of times may be appropriately selected according to an actual application situation. For example, the preset quantity of times may be three times, five times, or seven times, which is not specifically limited herein. Through the plurality of iterations of significant feature extraction processing performed according to these first significant palmprint line features, second significant palmprint line features can be more accurately extracted based on these first significant palmprint line features, so that the obtained second significant palmprint line features not only can be better compatible with the palmprint features of the palm, but also can more accurately express the palmprint features of the palm, thereby improving an extraction effect of the palmprint features of the palm.

In some embodiments, the each time of significant feature extraction processing may include the following operations:

obtaining a plurality of target palmprint line features, and concatenating the plurality of target palmprint line features to obtain a target palmprint line feature matrix, the target palmprint line feature being the first significant palmprint line feature or a second significant palmprint line feature obtained during a pervious iteration of significant feature extraction processing;

obtaining, for each target palmprint line feature in the target palmprint line feature matrix, second position relationship information between a palmprint area image corresponding to the target palmprint line feature and a palmprint area image corresponding to an adjacent palmprint line feature of the target palmprint line feature, and calculating, according to the target palmprint line feature and the second position relationship information, a second importance score corresponding to the target palmprint line feature; and

determining a plurality of second significant palmprint line features among all the target palmprint line features according to the second importance score.

During a first time of significant feature extraction processing, obtaining a plurality of target palmprint line features refers to obtaining a plurality of first significant palmprint line features. During a non-first time of significant feature extraction processing, obtaining a plurality of target palmprint line features refers to obtaining a plurality of second significant palmprint line features obtained during a previous time of significant feature extraction processing. Therefore, a plurality of times of significant feature extraction processing are a plurality of iterations of significant feature extraction processing, so that the obtained second significant palmprint line features can express the palmprint features of the palm more accurately. In addition, as can be learned according to the operations included in the significant feature extraction processing, operation 330 to operation 340 described above are actually a process of one time of significant feature extraction processing. Therefore, for the process of obtaining second position relationship information between the palmprint area image corresponding to the target palmprint line feature and the palmprint area image corresponding to the adjacent palmprint line feature of the target palmprint line feature, the process of calculating, according to the target palmprint line feature and the second position relationship information, a second importance score corresponding to the target palmprint line feature, and the process of determining a plurality of second significant palmprint line features among all the target palmprint line features according to the second importance score, reference may be made to related descriptions of the foregoing embodiments, and details are not described herein again.

In some embodiments, after the plurality of second significant palmprint line features obtained during each time of significant feature extraction processing are acquired, these second significant palmprint line features may be concatenated to obtain a significant palmprint line feature matrix, and then the significant palmprint line feature matrix (that is, the target palmprint line feature matrix) is used as an input parameter for a next time of significant feature extraction processing. During the concatenating of these second significant palmprint line features to obtain the significant palmprint line feature matrix, these second significant palmprint line features may be concatenated according to a sequence of feature positions, or these second significant palmprint line features may be concatenated randomly. This is not specifically limited herein. For example, in FIG. 6, palmprint line features F1 to F9 in the palmprint line feature matrix 610 respectively correspond to palmprint area images 11 to 19 in the palmprint area image matrix 620. It is assumed that the first significant palmprint line features selected after operation 330 to operation 340 are performed include: F1 and F3 in the first row, F5 and F6 in the second row, and F7 and F9 in the third row in the palmprint line feature matrix. In this case, after these first significant palmprint line features are obtained during the first time of significant feature extraction processing, these first significant palmprint line features may be concatenated into a $3 \times 2$ target palmprint line matrix. In the target palmprint line feature matrix, the target palmprint line features in the first row are F1 and F3, the target palmprint line features in the second row are F5 and F6, and the target palmprint line features in the third row are F7 and F9.

In some embodiments, after the plurality of second significant palmprint line features obtained during each time of significant feature extraction processing are obtained, feature fusion may be performed on these second significant palmprint line features and the first significant palmprint line features, to obtain a palmprint fusion feature, so that expression accuracy for the palmprint features of the palm image may be improved by using the palmprint fusion feature, thereby improving recognition accuracy of the palm image and improving a recognition effect of palmprint recognition.

In some embodiments, the first significant palmprint line features and the second significant palmprint line features obtained during each time of significant feature extraction processing may be concatenated to obtain a palmprint fusion feature. To ensure sequence information of the first significant palmprint line features and the second significant palmprint line features obtained in each time of significant feature extraction processing, the first significant palmprint line features and the second significant palmprint line features obtained in each time of significant feature extraction processing may be concatenated according to a sequence of performing the significant feature extraction processing. For example, it is assumed that a total of three times of significant feature extraction processing are performed, second significant palmprint line features obtained in the first time of significant feature extraction processing are a feature matrix feature_stage1, second significant palmprint line features obtained in the second time of significant feature extraction processing are a feature matrix feature _stage2, second significant palmprint line features obtained in the third time of significant feature extraction processing are a feature matrix feature_stage3, and the first significant palmprint line features are a feature matrix feature_stage0. In this case, it may be obtained that the palmprint fusion feature is Feature = concat (feature_stage0, feature_stage1, feature _stage2, feature _stage3).

In some embodiments, the palmprint recognition method provided in this embodiment of this application may be applied to application scenarios such as mobile payment and identity verification. Using a mobile payment scenario as an example, the palmprint recognition method may be used for identity recognition in the mobile payment scenario. For an overall procedure of the identity recognition, refer to FIG. 10. In FIG. 10, first, a hand image of a user is collected by using a terminal payment device. Then, finger gap key point detection is performed on the hand image by using a detection model.

After three finger gap key points of a hand of the user are detected, a palm image is extracted from the hand image based on the detected three finger gap key points. Then a recognition model is called to perform feature extraction on the palm image to obtain a palmprint feature vector. In a process of calling the recognition model to perform feature extraction on the palm image to obtain the palmprint feature vector, the palm image is first segmented into a plurality of palmprint area images that do not overlap with each other, and respective palmprint line features of these palmprint area images are extracted. Then, a multi-scale linear model is called to perform a plurality of iterations of significant feature extraction processing on these palmprint line features, a plurality of significant palmprint line features obtained during each time of significant feature extraction processing are obtained, and feature fusion is performed on all the significant palmprint line features, to obtain a palmprint fusion feature. Next, a palmprint recognition model is called to perform feature vectorization on the palmprint fusion feature to obtain a palmprint feature vector. After the palmprint feature vector is obtained, a feature similarity (for example, a cosine similarity) between the palmprint feature vector and a bottom library feature vector (that is, a candidate object feature vector of a candidate user) is calculated. For example, the feature similarity between the palmprint feature vector and the bottom library feature vector may be calculated by using the following formula (4):

$$sim\left(vector_{reg}, vector_{rec}\right) = \frac{\overrightarrow{vector_{reg}} \times \overrightarrow{vector_{rec}}}{\left\|vector_{reg}\right\| \times \left\|vector_{rec}\right\|} \qquad (4)$$

In formula (4), $vector_{reg}$ represents the bottom library feature vector, $vector_{rec}$ represents the palmprint feature vector, and $sim()$ represents calculation of the cosine similarity between $vector_{reg}$ and $vector_{rec}$.

After the feature similarity between the palmprint feature vector and the bottom library feature vector is calculated, an identity (ID) of a candidate user with a highest feature similarity is used as a palmprint recognition result, and then the obtained palmprint recognition result is returned to the terminal payment device, so that the terminal payment device can perform a payment operation according to the palmprint recognition result.

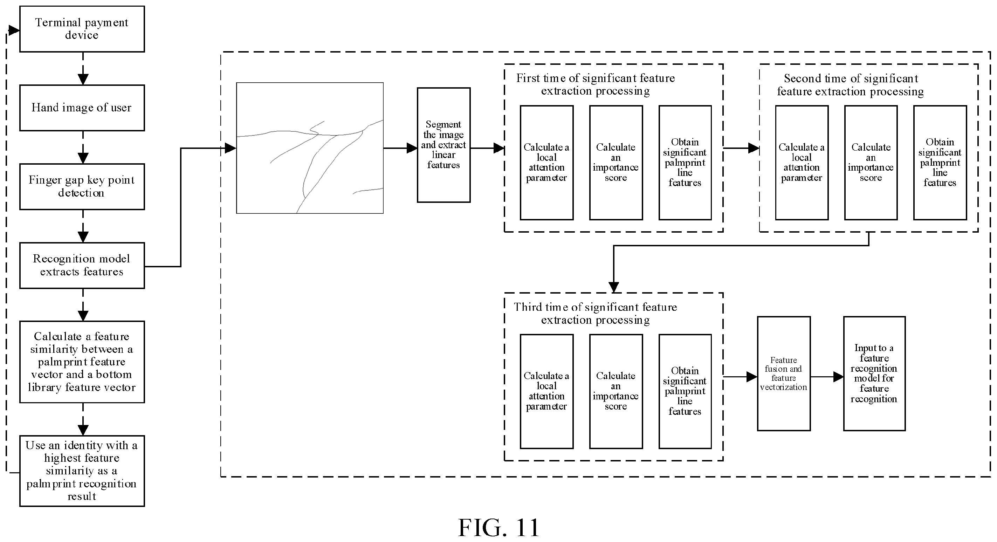

In some embodiments, as shown in FIG. 11, in a process of calling the recognition model to perform feature extraction on the palm image to obtain the palmprint feature vector, three iterations of significant feature extraction processing may be performed based on the palm image. Specifically, when the recognition model is called to perform feature extraction on the palm image, the palm image may be first segmented into a plurality of palmprint area images that do not overlap with each other, respective palmprint line features of these palmprint area images are extracted, and these palmprint line features are concatenated to obtain a palmprint line feature matrix. Then, a first time of significant feature extraction processing is performed on these palmprint line features. During the first time of significant feature extraction processing on these palmprint line features, a local attention parameter of each palmprint line feature is first calculated, and feature adjustment is performed on each palmprint line feature according to the local attention parameter of each palmprint line feature, to obtain a local attention feature of each palmprint line feature. Then, an importance score corresponding to each palmprint line feature is calculated according to the local attention feature of each palmprint line feature, importance scores of each row/column of palmprint line features in the palmprint line feature matrix are sorted in descending order, and palmprint line features corresponding to K (where K is greater than or equal to 1) importance scores ranking top in each row/column of palmprint line features are determined as a plurality of significant palmprint line features obtained during the first time of significant feature extraction processing. Next, these obtained significant palmprint line features are concatenated to obtain a significant palmprint line feature matrix, and a second time of significant feature extraction processing is performed on these significant palmprint line features. During the second time of significant feature extraction processing on these significant palmprint line features, a local attention parameter of each significant palmprint line feature is first calculated, and feature adjustment is performed on each significant palmprint line feature according to the local attention parameter of each significant palmprint line feature, to obtain a local attention feature of each significant palmprint line feature. Then, an importance score corresponding to each significant palmprint line feature is calculated according to the local attention feature of each significant palmprint line feature, importance scores of each row/column of palmprint line features in the significant palmprint line feature matrix are sorted in descending order, and significant palmprint line features corresponding to M (where M is greater than or equal to 1) importance scores ranking top in each row/column of palmprint line features are determined as a plurality of significant palmprint line features obtained during the second time of significant feature extraction processing. In this case, these significant palmprint line features obtained during the second time of significant feature extraction processing are concatenated to obtain a new significant palmprint line feature matrix, and a third time of significant feature extraction processing is performed on these significant palmprint line features. During the third time of significant feature extraction processing on these significant palmprint line features, a local attention parameter of each significant palmprint line feature is first calculated, and feature adjustment is performed on each significant palmprint line feature according to the local attention parameter of each significant palmprint line feature, to obtain a local attention feature of each significant palmprint line feature. Then, an importance score corresponding to each significant palmprint line feature is calculated according to the local attention feature of each significant palmprint line feature, importance scores of each row/column of palmprint line features in the new significant palmprint line feature matrix are sorted in descending order, and significant palmprint line features corresponding to N (where N is greater than or equal to 1) importance scores ranking top in each row/column of palmprint line features are determined as a plurality of significant palmprint line features obtained during the third time of significant feature extraction processing. After the plurality of significant palmprint line features obtained during each time of significant feature extraction processing are acquired, feature fusion is performed on the plurality of significant palmprint line features obtained during each time of significant feature extraction processing, to obtain a palmprint fusion feature. Then, a feature vectorization model in the palmprint recognition model is called to perform feature vectorization on the palmprint fusion feature, to obtain a palmprint feature vector. Next, the palmprint feature vector is input to a feature recognition model in the palmprint recognition model, allowing the feature recognition model in the palmprint recognition model to calculate a feature similarity between the palmprint feature vector and the bottom library feature vector, so that a palmprint recognition result can be obtained according to the feature similarity. K, M, and N may be preset values, or may be agreed on according to a proportion threshold. For example, it is assumed that the proportion threshold is 50%, and the palm image is segmented into $80 \times 80$ palmprint image areas that do not overlap each other, and each row in its corresponding palmprint line feature matrix includes 80 palmprint line features. In this case, according to the proportion threshold, it may be determined that K = 40, M = 20, and N = 10.

In some embodiments, the palmprint recognition method provided in this embodiment of this application may further be used for recognizing palmprints with high similarities. As shown in Table 1, high-definition and blurred palmprint images of forty pairs of twins are used as high-similarity palmprint images for testing. Left/Right hands of a same pair of twins are used as one sample pair, and 3600 sample pairs in total are included. In terms of high-definition images, there are 37 pairs of incorrectly recognized samples in an Arcface method (an object recognition method), while there are no incorrectly recognized samples in the palmprint recognition method provided in this embodiment of this application. In terms of blurred images, the Arcface method has 46 pairs of incorrectly recognized samples, while the palmprint recognition method provided in this embodiment of this application has no incorrectly recognized samples.

Table 1

| Recognition method | Quantity of incorrectly recognized samples of high-definition twin image samples | Quantity of incorrectly recognized samples of blurred twin image samples |
|---|---|---|
| Arcface | 37 | 46 |
| Palmprint recognition method of this solution | 0 | 0 |

As can be learned according to the content in Table 1, in the palmprint recognition method provided in this embodiment of this application, through a plurality of iterations of significant feature extraction processing, not only significant palmprint line features that are more accurate can be extracted, allowing the obtained significant palmprint line features to be better compatible with palmprint features of a palm, but also the obtained significant palmprint line features can more accurately express the palmprint features of the palm, thereby improving recognition effectiveness of high-similarity palmprints, and further improving accuracy of palmprint recognition.

The palmprint recognition method provided in the embodiments of this application is described in detail below by using a specific example.

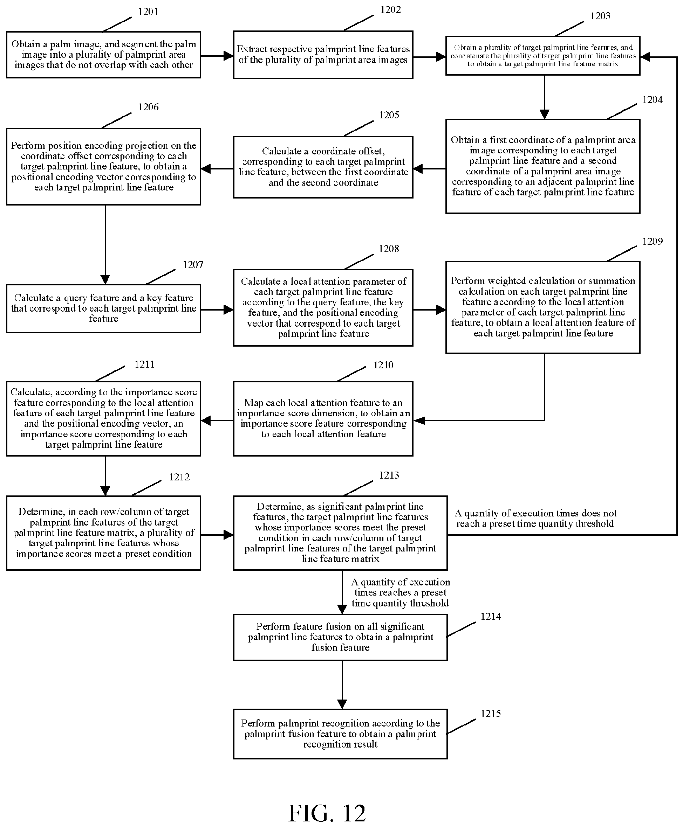

Referring to FIG. 12, FIG. 12 is a specific flowchart of a palmprint recognition method according to a specific example. In FIG. 12, the palmprint recognition method may include the following operation 1201 to operation 1216.

Operation 1201: Obtain a palm image, and segment the palm image into a plurality of palmprint area images that do not overlap with each other.

In some embodiments, during segmentation of the palm image into a plurality of palmprint area images that do not overlap with each other, a size of the palm image may be first adjusted, and then the palm image of the adjusted size is segmented into a plurality of palmprint area images that do not overlap with each other. For example, in some embodiments, the size of the palm image may be first adjusted to 224 * 224, and then, the palm image of the adjusted size is equally divided into 28 * 28 palmprint area images. The 28 * 28 palmprint area images may form a palmprint area image matrix, and each palmprint area image has a size of 8 * 8.

Operation 1202: Extract respective palmprint line features of the plurality of palmprint area images.

Operation 1203: Obtain a plurality of target palmprint line features, and concatenate the plurality of target palmprint line features to obtain a target palmprint line feature matrix.

When operation 1203 is performed for the first time, the target palmprint line feature is the palmprint line feature obtained in operation 1202. When operation 1203 is performed not for the first time, the target palmprint line feature is a significant palmprint line feature obtained in operation 1214.

Operation 1204: Obtain a first coordinate of a palmprint area image corresponding to each target palmprint line feature in the target palmprint line feature matrix and a second coordinate of a palmprint area image corresponding to an adjacent palmprint line feature of each target palmprint line feature.

The adjacent palmprint line feature of the target palmprint line feature refers to a palmprint line feature that is in the target palmprint line feature matrix and that can be adjacent to the target palmprint line feature.

Operation 1205: Calculate a coordinate offset, corresponding to each target palmprint line feature, between the first coordinate and the second coordinate.

Operation 1206: Perform position encoding projection on the coordinate offset corresponding to each target palmprint line feature, to obtain a positional encoding vector corresponding to each target palmprint line feature.

Operation 1207: Calculate a query feature and a key feature that correspond to each target palmprint line feature.

Operation 1208: Calculate a local attention parameter of each target palmprint line feature according to the query feature, the key feature, and the positional encoding vector that correspond to each target palmprint line feature.

Operation 1209: Perform weighted calculation or summation calculation on each target palmprint line feature according to the local attention parameter of each target palmprint line feature, to obtain a local attention feature of each target palmprint line feature.

Operation 1210: Map each local attention feature to an importance score dimension, to obtain an importance score feature corresponding to each local attention feature.

Operation 1211: Calculate, according to the importance score feature corresponding to the local attention feature of each target palmprint line feature and the positional encoding vector of each target palmprint line feature, an importance score corresponding to each target palmprint line feature.

Operation 1212: Determine, in each row/column of target palmprint line features of the target palmprint line feature matrix, a target palmprint line feature whose importance score meets a preset condition.

Operation 1213: Determine, as a significant palmprint line feature, the target palmprint line feature whose importance score meets the preset condition in each row/column of target palmprint line features of the target palmprint line feature matrix, and then perform operation 1203, until a quantity of times of performing operation 1214 reaches a preset time quantity threshold.

Operation 1214: Perform feature fusion on all significant palmprint line features to obtain a palmprint fusion feature.

Operation 1215: Perform palmprint recognition according to the palmprint fusion feature to obtain a palmprint recognition result.

In this embodiment, through the palmprint recognition method of operation 1201 to operation 1215 described above, after a palm image is obtained, the palm image is first segmented into a plurality of palmprint area images that do not overlap with each other, and respective palmprint line features of the plurality of palmprint area images are extracted. Through the segmentation of the palm image into the plurality of palmprint area images that do not overlap with each other, a large-range texture area of an entire palm may be segmented into a plurality of small-range palmprint line areas, so that extraction efficiency of the palmprint line features of these palmprint area images may be improved during the extraction of the palmprint line features of these palmprint area images. In addition, a palmprint of the palm includes palmprint lines, and image content of the plurality of palmprint area images obtained through segmentation can be mainly palmprint lines. Therefore, during the extraction of the palmprint line features of these palmprint area images, extraction accuracy of the palmprint line features of these palmprint area images can also be improved. After the plurality of palmprint line features are obtained, a plurality of iterations of significant feature extraction processing are performed according to these palmprint line features, and a plurality of significant palmprint line features obtained during each time of significant feature extraction processing are obtained. Through the plurality of iterations of significant feature extraction processing performed according to these palmprint line features, significant palmprint line features can be more accurately extracted based on these palmprint line features, so that the obtained significant palmprint line features not only can be better compatible with palmprint features of the palm, but also can more accurately express the palmprint features of the palm, thereby improving an extraction effect of the palmprint features of the palm. After the plurality of significant palmprint line features obtained during each time of significant feature extraction processing are acquired, feature fusion is performed on all the significant palmprint line features to obtain a palmprint fusion feature, and then palmprint recognition is performed according to the palmprint fusion feature to obtain a palmprint recognition result. Through the feature fusion on all the significant palmprint line features to obtain the palmprint fusion feature, accuracy of the palmprint fusion feature in expressing the palmprint features of the palm can be further improved. Therefore, the accuracy of palmprint recognition can be improved when the palmprint recognition is performed according to the palmprint fusion feature, thereby improving a recognition effect of the palmprint recognition.

The application scenarios of the embodiments of this application are described below with some practical examples.

The palmprint recognition method provided in the embodiments of this application may be applied to different application scenarios such as a transaction payment scenario, an access control scenario, or an in-vehicle scenario. The transaction payment scenario, the access control scenario, and the in-vehicle scenario are used as examples for description below.

Scenario 1

The palmprint recognition method provided in the embodiments of this application may be applied to a transaction payment scenario. For example, when a consumer performs palmprint scanning payment through a terminal such as a smartphone or a cashier, in response to scanning a palm image of the consumer, the terminal such as the smartphone or the cashier sends the palm image of the consumer to a server. In response to receiving the palm image of the consumer, the server first segments the palm image into a plurality of palmprint area images that do not overlap with each other, and extracts respective palmprint line features of the plurality of palmprint area images; then obtains, for each of the palmprint line features, first position relationship information between a palmprint area image corresponding to the palmprint line feature and a palmprint area image corresponding to an adjacent palmprint line feature of the palmprint line feature; and calculates, according to the palmprint line feature and the first position relationship information, a first importance score corresponding to the palmprint line feature. After obtaining the first importance score corresponding to each palmprint line feature through calculation, the server determines a plurality of first significant palmprint line features among all the palmprint line features according to these first importance scores, then performs palmprint recognition according to these first significant palmprint line features to obtain a palmprint recognition result, and then sends the palmprint recognition result to the terminal such as the smartphone or the cashier. In this case, the terminal such as the smartphone or the cashier completes a payment operation according to the palmprint recognition result.

Scenario 2

The palmprint recognition method provided in the embodiments of this application may also be applied to an access control scenario. For example, when a dweller requests to open a door by using an access control terminal, in response to scanning a palm image of the dweller, the access control terminal sends the palm image of the dweller to a server. In response to receiving the palm image of the dweller, the server first segments the palm image into a plurality of palmprint area images that do not overlap with each other, and extracts respective palmprint line features of the plurality of palmprint area images; then obtains, for each of the palmprint line features, first position relationship information between a palmprint area image corresponding to the palmprint line feature and a palmprint area image corresponding to an adjacent palmprint line feature of the palmprint line feature; and calculates, according to the palmprint line feature and the first position relationship information, a first importance score corresponding to the palmprint line feature. After obtaining the first importance score corresponding to each palmprint line feature through calculation, the server determines a plurality of first significant palmprint line features among all the palmprint line features according to these first importance scores, then performs palmprint recognition according to these first significant palmprint line features to obtain a palmprint recognition result, and then sends the palmprint recognition result to the access control terminal. In this case, the access control terminal unlocks the door according to the palmprint recognition result.

Scenario 3

The palmprint recognition method provided in the embodiments of this application may further be applied to an in-vehicle scenario. For example, when a driver requests to start a vehicle through an in-vehicle terminal, in response to scanning a palm image of the driver, the in-vehicle terminal sends the palm image of the driver to a server. In response to receiving the palm image of the driver, the server first segments the palm image into a plurality of palmprint area images that do not overlap with each other, and extracts respective palmprint line features of the plurality of palmprint area images; then obtains, for each of palmprint line features, first position relationship information between a palmprint area image corresponding to the palmprint line feature and a palmprint area image corresponding to an adjacent palmprint line feature of the palmprint line feature; and calculates, according to the palmprint line feature and the first position relationship information, a first importance score corresponding to the palmprint line feature. After obtaining the first importance score corresponding to each palmprint line feature through calculation, the server determines a plurality of first significant palmprint line features among all the palmprint line features according to these first importance scores, then performs palmprint recognition according to these first significant palmprint line features to obtain a palmprint recognition result, and then sends the palmprint recognition result to the in-vehicle terminal. In this case, the in-vehicle terminal starts the vehicle according to the palmprint recognition result.

Although the operations in each of the flowcharts are displayed sequentially according to the arrows, these operations are not necessarily performed in the sequence indicated by the arrows. Unless otherwise explicitly specified in this embodiment, execution of the operations is not strictly limited, and the operations may be performed in other sequences. In addition, at least some operations in the above flowcharts may include a plurality of operations or a plurality of stages, and these operations or stages are not necessarily performed at the same time, but may be performed at different times. The operations or stages are not necessarily performed sequentially, but may be performed by turns or alternately with other operations or at least some of operations or stages in other operations.

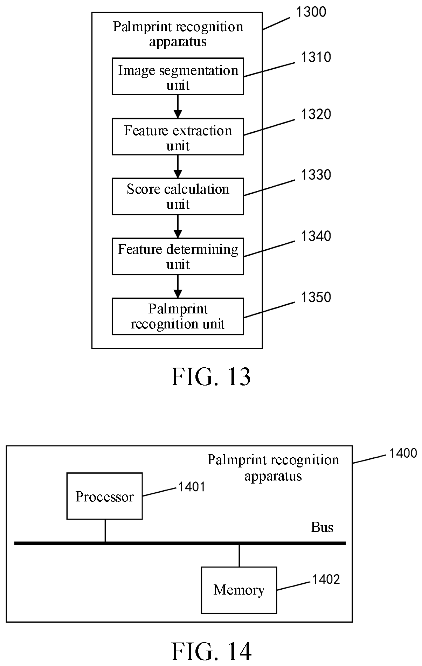

Referring to FIG. 13, an embodiment of this application further discloses a palmprint recognition apparatus. The palmprint recognition apparatus 1300 can implement the palmprint recognition method in the foregoing embodiments. The palmprint recognition apparatus 1300 includes:

an image segmentation unit 1310, configured to obtain a palm image, and segment the palm image into a plurality of palmprint area images that do not overlap with each other;

a feature extraction unit 1320, configured to extract respective palmprint line features of the plurality of palmprint area images;

a score calculation unit 1330, configured to obtain, for each of the palmprint line features, first position relationship information between a palmprint area image corresponding to the palmprint line feature and a palmprint area image corresponding to an adjacent palmprint line feature of the palmprint line feature, and calculate, according to the palmprint line feature and the first position relationship information, a first importance score corresponding to the palmprint line feature;

a feature determining unit 1340, configured to determine a plurality of first significant palmprint line features among all the palmprint line features according to the first importance score; and

a palmprint recognition unit 1350, configured to perform palmprint recognition according to the plurality of first significant palmprint line features to obtain a palmprint recognition result.

Because the palmprint recognition apparatus 1300 in this embodiment can implement the palmprint recognition method in the foregoing embodiments, the palmprint recognition apparatus 1300 in this embodiment has the same technical principle and the same beneficial effect as the palmprint recognition method in the foregoing embodiments. To avoid repetition, details are not described herein again.

Referring to FIG. 14, an embodiment of this application further discloses a palmprint recognition apparatus. The palmprint recognition apparatus 1400 includes:

at least one processor 1401; and

at least one memory 1402, configured to store at least one program;

the at least one program, when executed by the at least one processor 1401, implementing the palmprint recognition method described above.

An embodiment of this application further provides a computer-readable storage medium, storing a processor-executable computer program, the processor-executable computer program, when executed by a processor, implementing the palmprint recognition method described above.

An embodiment of this application further provides a computer program product, including a computer program or computer instructions, the computer program or the computer instructions being stored in a computer-readable storage medium, a processor of a palmprint recognition apparatus reading the computer program or the computer instructions from the computer-readable storage medium, and the processor executing the computer program or the computer instructions to cause the palmprint recognition apparatus to perform the palmprint recognition method described above.

In the specification and the foregoing accompanying drawings of this application, the terms "first", "second", "third", "fourth", and so on (if existent) are intended to distinguish between similar objects but do not necessarily indicate a specific order or sequence. Data used in such a way is interchangeable in a proper case, so that the embodiments of this application described herein can be implemented in an order different from the order illustrated or described herein. In addition, the terms "include" and "have" and any other variants thereof are intended to cover the non-exclusive inclusion. For example, a process, method, system, product, or apparatus that includes a list of operations or units is not necessarily limited to those expressly listed operations or units, but may include other operations or units not expressly listed or inherent to such a process, method, product, or apparatus.

In this application, "at least one" refers to one or more, and "a plurality of" refers to two or more. The term "and/or" is configured for describing an association between associated objects and representing that three associations may exist. For example, "A and/or B" may indicate that only A exists, only B exists, and both A and B exist, where A and B may be singular or plural. The character "/" generally indicates an "or" relationship between the associated objects. "At least one of the following" or a similar expression thereof refers to any combination of these items, including one item or any combination of a plurality of items. For example, at least one of a, b, or c may represent a, b, c, "a and b", "a and c", "b and c", or "a, b, and c", where a, b, and c may be singular or plural.

In the several embodiments provided in this application, the disclosed system, apparatus, and method may be implemented in other manners. For example, the described apparatus embodiment is merely an example. For example, the unit division is merely a logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and components displayed as units may or may not be physical units, that is, may be located in one position, or may be distributed on a plurality of network units. Some or all of the units may be selected according to actual needs to achieve the objectives of the solutions of the embodiments.

In addition, functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the related art, or all or some of the technical solutions may be implemented in a form of a software product. The computer software product is stored in a storage medium and includes several instructions for indicating a computer apparatus (which may be a personal computer, a server, or a network apparatus) to perform all or some of the operations of the methods described in the embodiments of this application. The foregoing storage medium includes: any medium that can store program code, such as a USB flash disk, a removable hard disk, a read-only memory (ROM), a random access memory (RAM), a magnetic disk, or an optical disc.

Numbering of operations in the foregoing method embodiments is merely set for ease of elaboration, and the sequence of the operations is not limited. An execution sequence of the operations in the embodiments may be adaptively adjusted according to understandings by a person skilled in the art.

## Claims

1. A palmprint recognition method, comprising:

    obtaining a palm image;
    segmenting the palm image into a plurality of non-overlapping palmprint area images;
    extracting, for each palmprint area image, a palmprint line feature;
    determining, for each palmprint line feature, a first relevance level based on first position relationship information between a first palmprint area image corresponding to the respective palmprint line feature and a second palmprint area image corresponding to an adjacent palmprint line feature;
    determining a plurality of first significant palmprint line features among all the palmprint line features according to the first relevance level; and
    performing palmprint recognition according to the plurality of first significant palmprint line features.

2. The method according to claim 1, wherein the determining, for each palmprint line feature, a first relevance level based on first position relationship information comprises:

    determining, according to the respective palmprint line feature and the first position relationship information, a local attention feature corresponding to the respective palmprint line feature; and
    determining, according to the local attention feature and the first position relationship information, the first relevance level corresponding to the respective palmprint line feature.

3. The method according to claim 2, wherein the determining, according to the local attention feature and the first position relationship information, the first relevance level corresponding to the respective palmprint line feature comprises:

    mapping the local attention feature to an relevance level dimension to obtain an relevance level feature corresponding to the respective palmprint line feature; and

determining, according to the relevance level feature and the first position relationship information, the first relevance level corresponding to the respective palmprint line feature.

4. The method according to claim 3, wherein in a case that a plurality of adjacent palmprint line features being provided, the determining, according to the relevance level feature and the first position relationship information, the first relevance level corresponding to the respective palmprint line feature comprises:
performing multiplication and accumulation calculation on the relevance level feature and first position relationship information that corresponds to the plurality of adjacent palmprint line features, to obtain the first relevance level corresponding to the respective palmprint line feature.

5. The method according to claim 2, wherein the determining, according to the respective palmprint line feature and the first position relationship information, a local attention feature corresponding to the respective palmprint line feature comprises:

performing local attention calculation according to the respective palmprint line feature and the first position relationship information to obtain a local attention parameter corresponding to the respective palmprint line feature; and
determining, according to the respective palmprint line feature and the local attention parameter, the local attention feature corresponding to the respective palmprint line feature.

6. The method according to claim 5, wherein the performing local attention calculation according to the respective palmprint line feature and the first position relationship information to obtain a local attention parameter corresponding to the respective palmprint line feature comprises:

determining, according to the respective palmprint line feature, a query feature and a key feature that correspond to the respective palmprint line feature; and
determining, according to the query feature, the key feature, and the first position relationship information, the local attention parameter corresponding to the respective palmprint line feature.

7. The method according to claim 5, wherein the determining, according to the respective palmprint line feature and the local attention parameter, the local attention feature corresponding to the respective palmprint line feature comprises:
performing weighted calculation or summation calculation on the respective palmprint line feature according to the local attention parameter to obtain the local attention feature corresponding to the respective palmprint line feature.

8. The method according to any one of claims 1 to 7, wherein the first position relationship information is obtained by:

obtaining a first coordinate of the palmprint area image corresponding to the respective palmprint line feature, and a second coordinate of the palmprint area image corresponding to the adjacent palmprint line feature of the respective palmprint line feature;
determining, according to the first coordinate and the second coordinate, a positional encoding vector corresponding to the respective palmprint line feature; and
determining the positional encoding vector as the first position relationship information of the respective palmprint line feature.

9. The method according to claim 8, wherein the determining, according to the first coordinate and the second coordinate, a positional encoding vector corresponding to the respective palmprint line feature comprises:

determining a coordinate offset between the first coordinate and the second coordinate; and
performing position encoding projection on the coordinate offset to obtain the positional encoding vector corresponding to the respective palmprint line feature.

10. The method according to any one of claims 1 to 9, wherein the determining a plurality of first significant palmprint line features among all the palmprint line features according to the first relevance level comprises:

selecting, for each row of palmprint line features in a palmprint line feature matrix obtained by concatenating all the palmprint line features, a proportion threshold of palmprint line features having highest first relevance levels from the row of palmprint line features, as the first significant palmprint line features;
or

selecting, for each column of palmprint line features in a palmprint line feature matrix obtained by concatenating all the palmprint line features, a proportion threshold of palmprint line features having highest first relevance levels from the column of palmprint line features, as the first significant palmprint line features.

11. The method according to any one of claims 1 to 10, wherein the performing palmprint recognition according to the plurality of first significant palmprint line features comprises:

performing a plurality of iterations of significant feature extraction processing according to the plurality of first significant palmprint line features, to obtain a plurality of second significant palmprint line features obtained during each time of significant feature extraction processing;
performing feature fusion on the first significant palmprint line features and all the second significant palmprint line features to obtain a palmprint fusion feature; and
performing palmprint recognition according to the palmprint fusion feature.

12. The method according to claim 11, wherein the each time of significant feature extraction processing comprises:

obtaining a plurality of target palmprint line features;
concatenating the plurality of target palmprint line features to obtain a target palmprint line feature matrix, the target palmprint line feature being the first significant palmprint line feature or a second significant palmprint line feature obtained during a pervious significant feature extraction;
determining, for each target palmprint line feature in the target palmprint line feature matrix, a second relevance level based on second position relationship information between a third palmprint area image corresponding to the respective target palmprint line feature and a fourth palmprint area image corresponding to an adjacent palmprint line feature; and
determining a plurality of second significant palmprint line features among all the target palmprint line features according to the second relevance level.

13. A palmprint recognition apparatus, comprising:

an image segmentation unit, configured to obtain a palm image, and segment the palm image into a plurality of non-overlapping palmprint area images;
a feature extraction unit, configured to extract, for each palmprint area image, a palmprint line feature;
a level determining unit, configured to determine, for each palmprint line feature, a first relevance level based on first position relationship information between a first palmprint area image corresponding to the respective palmprint line feature and a second palmprint area image corresponding to an adjacent palmprint line feature of said palmprint line feature;
a feature determining unit, configured to determine a plurality of first significant palmprint line features among all the palmprint line features according to the first relevance level; and
a palmprint recognition unit, configured to perform palmprint recognition according to the plurality of first significant palmprint line features.

14. A palmprint recognition apparatus, comprising:

at least one processor; and
at least one memory, configured to store at least one program;
the at least one program, when executed by the at least one processor, implementing the palmprint recognition method according to any one of claims 1 to 12.

15. A computer-readable storage medium, storing a processor-executable computer program, the processor-executable computer program, when executed by a processor, implementing the palmprint recognition method according to any one of claims 1 to 12.

16. A computer program product, comprising computer instructions, the computer instructions being stored in a computer-readable storage medium, and the computer instructions, when executed, implementing the palmprint recognition method according to any one of claims 1 to 12.

FIG. 1

FIG. 2

Obtain a palm image, and segment the palm image into a plurality of palmprint area images that do not overlap with each other — 310

Extract respective palmprint line features of the plurality of palmprint area images — 320

Obtain, for each of the palmprint line features, first position relationship information between a palmprint area image corresponding to the palmprint line feature and a palmprint area image corresponding to an adjacent palmprint line feature of the palmprint line feature, and calculate, according to the palmprint line feature and the first position relationship information, a first importance score corresponding to the palmprint line feature — 330

Determine a plurality of first significant palmprint line features among all the palmprint line features according to the first importance score — 340

Perform palmprint recognition according to the plurality of first significant palmprint line features to obtain a palmprint recognition result — 350

FIG. 3

FIG. 4

FIG. 5

FIG. 6

FIG. 7

FIG. 8

Palmprint line features:

| B1 | B2 | B3 |

Correspondence

Local attention parameters:

| C1 | C2 | C3 |

Summation

Local attention features:

| B1+C1 | B2+C2 | B3+C3 |

## FIG. 9

Terminal payment device

↓

Hand image of user

↓

Finger gap key point detection

↓

Recognition model extracts features

↓

Calculate a feature similarity between a palmprint feature vector and a bottom library feature vector

↓

Use an identity with a highest feature similarity as a palmprint recognition result

## FIG. 10

```
┌─────────────────┐
│ Terminal payment│
│     device      │
└─────────────────┘
        │
        ▼
┌─────────────────┐
│Hand image of user│
└─────────────────┘
        │
        ▼
┌─────────────────┐
│Finger gap key point│
│    detection    │
└─────────────────┘
        │
        ▼
┌─────────────────┐
│Recognition model│
│extracts features│
└─────────────────┘
        │
        ▼
┌─────────────────┐
│Calculate a feature│
│similarity between a│
│palmprint feature│
│vector and a bottom│
│library feature vector│
└─────────────────┘
        │
        ▼
┌─────────────────┐
│Use an identity with a│
│highest feature  │
│similarity as a  │
│palmprint recognition│
│     result      │
└─────────────────┘
```

First time of significant feature extraction processing

Calculate a local attention parameter

Calculate an importance score

Obtain significant palmprint line features

Second time of significant feature extraction processing

Calculate a local attention parameter

Calculate an importance score

Obtain significant palmprint line features

Segment the image and extract linear features

Third time of significant feature extraction processing

Calculate a local attention parameter

Calculate an importance score

Obtain significant palmprint line features

Feature fusion and feature vectorization

Input to a feature recognition model for feature recognition

FIG. 11

**1201**

Obtain a palm image, and segment the palm image into a plurality of palmprint area images that do not overlap with each other

**1202**

Extract respective palmprint line features of the plurality of palmprint area images

**1203**

Obtain a plurality of target palmprint line features, and concatenate the plurality of target palmprint line features to obtain a target palmprint line feature matrix

**1206**

Perform position encoding projection on the coordinate offset corresponding to each target palmprint line feature, to obtain a positional encoding vector corresponding to each target palmprint line feature

**1205**

Calculate a coordinate offset, corresponding to each target palmprint line feature, between the first coordinate and the second coordinate

**1204**

Obtain a first coordinate of a palmprint area image corresponding to each target palmprint line feature and a second coordinate of a palmprint area image corresponding to an adjacent palmprint line feature of each target palmprint line feature

**1207**

Calculate a query feature and a key feature that correspond to each target palmprint line feature

**1208**

Calculate a local attention parameter of each target palmprint line feature according to the query feature, the key feature, and the positional encoding vector that correspond to each target palmprint line feature

**1209**

Perform weighted calculation or summation calculation on each target palmprint line feature according to the local attention parameter of each target palmprint line feature, to obtain a local attention feature of each target palmprint line feature

**1211**

Calculate, according to the importance score feature corresponding to the local attention feature of each target palmprint line feature and the positional encoding vector, an importance score corresponding to each target palmprint line feature

**1210**

Map each local attention feature to an importance score dimension, to obtain an importance score feature corresponding to each local attention feature

**1212**

Determine, in each row/column of target palmprint line features of the target palmprint line feature matrix, a plurality of target palmprint line features whose importance scores meet a preset condition

**1213**

Determine, as significant palmprint line features, the target palmprint line features whose importance scores meet the preset condition in each row/column of target palmprint line features of the target palmprint line feature matrix

A quantity of execution times does not reach a preset time quantity threshold

A quantity of execution times reaches a preset time quantity threshold

**1214**

Perform feature fusion on all significant palmprint line features to obtain a palmprint fusion feature

**1215**

Perform palmprint recognition according to the palmprint fusion feature to obtain a palmprint recognition result

# FIG. 12

Palmprint recognition
apparatus — 1300

Image segmentation
unit — 1310

↓

Feature extraction
unit — 1320

↓

Score calculation
unit — 1330

↓

Feature determining
unit — 1340

↓

Palmprint
recognition unit — 1350

## FIG. 13

Palmprint recognition
apparatus — 1400

Processor — 1401

Bus

Memory — 1402

## FIG. 14

## INTERNATIONAL SEARCH REPORT

| International application No. |
| --- |
| **PCT/CN2024/121027** |

**A. CLASSIFICATION OF SUBJECT MATTER**

G06V40/12(2022.01)i

According to International Patent Classification (IPC) or to both national classification and IPC

**B. FIELDS SEARCHED**

Minimum documentation searched (classification system followed by classification symbols)

IPC:G06V

Documentation searched other than minimum documentation to the extent that such documents are included in the fields searched

Electronic data base consulted during the international search (name of data base and, where practicable, search terms used)

CNTXT, ENTXTC, USTXT, VEN, CNKI: 掌纹, 线, 图像, 图片, 分, 割, 区域, 邻近, 相邻, 位置, 识别, 特征, 显著, 重要, palm, print, line, picture, segment, partition, region, area, part, neighbor, round, location, position, identify, recognise, characteristic, feature, importance, distinct, notable, significance

**C. DOCUMENTS CONSIDERED TO BE RELEVANT**

| Category* | Citation of document, with indication, where appropriate, of the relevant passages | Relevant to claim No. |
| --- | --- | --- |
| PX | CN 117058723 A (TENCENT TECHNOLOGY (SHENZHEN) CO., LTD.) 14 November 2023 (2023-11-14)<br>claims 1-14, description, paragraphs 2-132, and figures 1-14 | 1-9, 11-16 |
| A | CN 113705344 A (XI'AN JIAOTONG UNIVERSITY) 26 November 2021 (2021-11-26)<br>description, paragraphs 50-83, and figures 1-2 | 1-16 |
| A | CN 110852216 A (PING AN TECHNOLOGY (SHENZHEN) CO., LTD.) 28 February 2020 (2020-02-28)<br>entire document | 1-16 |
| A | CN 116612501 A (TENCENT TECHNOLOGY (SHENZHEN) CO., LTD.) 18 August 2023 (2023-08-18)<br>entire document | 1-16 |
| A | WO 2023160048 A1 (TENCENT TECHNOLOGY (SHENZHEN) CO., LTD.) 31 August 2023 (2023-08-31)<br>entire document | 1-16 |

☑ Further documents are listed in the continuation of Box C. ☑ See patent family annex.

| * | Special categories of cited documents: |
| --- | --- |

"A" document defining the general state of the art which is not considered to be of particular relevance

"D" document cited by the applicant in the international application

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **19 November 2024** | **06 December 2024** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2024/121027** |

**C.      DOCUMENTS CONSIDERED TO BE RELEVANT**

| Category* | Citation of document, with indication, where appropriate, of the relevant passages | Relevant to claim No. |
|---|---|---|
| A | US 2023186585 A1 (NEC CORP.) 15 June 2023 (2023-06-15) entire document | 1-16 |
| A | KR 102513468 B1 (LEE SANG HOON) 24 March 2023 (2023-03-24) entire document | 1-16 |

Form PCT/ISA/210 (second sheet) (July 2022)

**INTERNATIONAL SEARCH REPORT**
Information on patent family members

International application No.

**PCT/CN2024/121027**

| Patent document cited in search report | | | Publication date (day/month/year) | Patent family member(s) | | | Publication date (day/month/year) |
|---|---|---|---|---|---|---|---|
| CN | 117058723 | A | 14 November 2023 | CN | 117058723 | B | 19 January 2024 |
| CN | 113705344 | A | 26 November 2021 | CN | 113705344 | B | 01 October 2024 |
| CN | 110852216 | A | 28 February 2020 | WO | 2021082684 | A1 | 06 May 2021 |
| CN | 116612501 | A | 18 August 2023 | CN | 116612501 | B | 21 June 2024 |
| | | | | HK | 40091916 | A0 | 15 December 2023 |
| WO | 2023160048 | A1 | 31 August 2023 | EP | 4451229 | A1 | 23 October 2024 |
| | | | | US | 2023394869 | A1 | 07 December 2023 |
| | | | | KR | 20240115861 | A | 26 July 2024 |
| | | | | CN | 115527079 | A | 27 December 2022 |
| | | | | HK | 40080401 | A0 | 05 May 2023 |
| | | | | CN | 115527079 | B | 14 July 2023 |
| | | | | HK | 40080401 | A1 | 22 September 2023 |
| US | 2023186585 | A1 | 15 June 2023 | JPWO | 2021161375 | A1 | 19 August 2021 |
| | | | | JP | 7322980 | B2 | 08 August 2023 |
| | | | | WO | 2021161375 | A1 | 19 August 2021 |
| KR | 102513468 | B1 | 24 March 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311314425